# EUROPEAN PATENT APPLICATION

(11) **EP 4 704 201 A1**
(43) Date of publication of application: **04.03.2026**
(21) Application number: 23935307.1
(22) Date of filing: 26.04.2023
(51) Int. Cl.: H01M 10/052, H01M 4/66, H01M 50/534, H01M 50/536

(54) **LITHIUM SECONDARY BATTERY**

(71) Applicant: TERAWATT TECHNOLOGY K.K., Yokohama-shi, Kanagawa 226-0026 (JP)
(72) Inventor: OYAMA, Gosuke, Yokohama-shi, Kanagawa 226-0026 (JP); MIYAKE, Minoru, Yokohama-shi, Kanagawa 226-0026 (JP); FUJIKI, Satoshi, Yokohama-shi, Kanagawa 226-0026 (JP); OGATA, Ken, Yokohama-shi, Kanagawa 226-0026 (JP)
(74) Representative: FRKelly
(86) International application number: PCT/JP2023/016516
(87) International publication number: WO 2024/224527

(57) **Abstract**

There is provided a technique for suppressing a decrease in output characteristics and productivity of a lithium secondary battery. A lithium secondary battery is provided. The lithium secondary battery includes (a) a first laminate including a first end part, (b) an intermediate laminate, (c) a second laminate including a second end part, (d) a metal sheet including a first portion that overlaps with the first end part and the second end part in a case of being viewed from the lamination direction and a second portion that does not overlap with the first end part and the second end part in a case of being viewed from the lamination direction, and (e) an electrode tab that is electrically connected to the first laminate and the second laminate. The electrode tab has a first bonding mark and a second bonding mark. The first bonding mark is a bonding mark due to bonding of the electrode tab and the first end part, the first portion, and the second end part of the metal sheet. The second bonding mark is a bonding mark due to bonding of the electrode tab and the second portion of the metal sheet.

## Description

### Technical Field

An exemplary embodiment according to the present disclosure relates to a lithium secondary battery.

### Background Art

Patent Literature 1 discloses that the safety of a battery cell is improved by using a current collector in which a metal layer is formed on both surfaces of a resin film. In the resin film, the front and back of the film are separated by a resin layer having insulating properties, and thus electrical conduction cannot be obtained. Therefore, in a case of connecting an electrode tab for leading out a wiring and an electrode film, conduction cannot be obtained between the front and back of the electrode and between a plurality of the electrodes and a plurality of the electrode tab. In this regard, Patent Literature 2 discloses that a plurality of current collectors are folded and then laminated on each metal layer in order to connect each metal layer separated by a resin layer to an electrode tab for leading out a wiring.

### Citation List

### Patent Literatures

Patent Literature 1: Japanese Patent Application Laid-Open No. H11-102711
Patent Literature 2: Japanese Patent Application Laid-Open No. 2013-016321

### Summary of Invention

### Technical Problem

The present disclosure provides a technique for suppressing a decrease in output characteristics and productivity of a lithium secondary battery.

### Solution to Problem

In one exemplary embodiment of the present disclosure, there is provided a lithium secondary battery including (a) a first laminate including a first current collector and a first electrode, the first current collector comprising a first insulating layer and a pair of first conductive layers, the pair of first conductive layers sandwiching the first insulating layer, the first electrode being disposed on the first current collector, the first current collector including a first end part at which the first electrode is not disposed; (b) an intermediate laminate including an electrode and a separator, the electrode having a polarity different from a polarity of the first electrode; (c) a second laminate disposed to be spaced apart from the first laminate in a lamination direction by interposing the intermediate laminate, the second laminate including a second current collector and a second electrode, the second current collector comprising a second insulating layer and a pair of second conductive layers, the pair of second conductive layers sandwiching the second insulating layer, the second current collector including a second end part at which the second electrode is not disposed, the second electrode being disposed on the second current collector and having the same polarity as the first electrode; (d) a metal sheet disposed to be lined up in the lamination direction with respect to the first end part and the second end part, the metal sheet including a first portion and a second portion, the first portion overlapping with the first end part and the second end part in a case of being viewed from the lamination direction, the second portion not overlapping with the first end part and the second end part in a case of being viewed from the lamination direction; and (e) an electrode tab being electrically connected to the first laminate and the second laminate, the electrode tab having a first bonding mark and a second bonding mark, the first bonding mark being a bonding mark due to bonding of the electrode tab with the first end part, the first portion of the metal sheet, and the second end part, the second bonding mark being a bonding mark due to bonding of the electrode tab with the second portion of the metal sheet.

### Advantageous Effect of Invention

According to one exemplary embodiment of the present disclosure, it is possible to provide a technique for suppressing a decrease in output characteristics and productivity of a lithium secondary battery.

### Brief Description of Drawings

[Figure 1] Figure 1 is an exploded perspective view for an explanatory description of a configuration example of a secondary battery 1.
[Figure 2A] Figure 2A is a perspective view illustrating an example of a negative electrode 10.
[Figure 2B] Figure 2B is a perspective view illustrating another example of the negative electrode 10.
[Figure 3] Figure 3 is a perspective view illustrating an example of a positive electrode laminate 30 and a metal sheet MS.
[Figure 4A] Figure 4A is a view for an explanatory description of an example of a bonding mark.
[Figure 4B] Figure 4B is a view for an explanatory description of another example of the bonding mark.
[Figure 4C] Figure 4C is a view for an explanatory description of another example of the bonding mark.
[Figure 4D] Figure 4D is a view for an explanatory description of another example of the bonding mark.
[Figure 5] Figure 5 is a view for an explanatory description of a bonding state of a positive electrode tab 40, an end part P, and a metal sheet MS.
[Figure 6] Figure 6 is a view for an explanatory description of a first bonding mark.
[Figure 7] Figure 7 is a flowchart illustrating an example of the present manufacturing method.
[Figure 8A] Figure 8A is a view for an explanatory description of a step ST1 of Figure 7.
[Figure 8B] Figure 8B is a view for an explanatory description of the step ST1 of Figure 7.
[Figure 9A] Figure 9A is a view for an explanatory description of the step ST2 of Figure 7.
[Figure 9B] Figure 9B is a view for an explanatory description of the step ST2 of Figure 7.
[Figure 9C] Figure 9C is a view for an explanatory description of the step ST2 of Figure 7.
[Figure 9D] Figure 9D is a view for an explanatory description of the step ST2 of Figure 7.
[Figure 10] Figure 10 is a view for an explanatory description of a step ST3 of Figure 7.
[Figure 11] Figure 11 is a perspective view illustrating another example of the negative electrode 10.
[Figure 12] Figure 12 is a perspective view illustrating another example of the negative electrode 10.
[Figure 13] Figure 13 is a cross-sectional view of a main part for an explanatory description of another configuration example of the lithium secondary battery.
[Figure 14] Figure 14 is a cross-sectional view of a main part for an explanatory description of another configuration example of the lithium secondary battery.
[Figure 15] Figure 15 is a perspective view for an explanatory description of another configuration example of the positive electrode laminate.
[Figure 16] Figure 16 is a perspective view for an explanatory description of another configuration example of the positive electrode laminate.

### Description of Embodiments

Hereinafter, each embodiment according to the present disclosure will be described.

In one exemplary embodiment, there is provided a lithium secondary battery including: (a) a first laminate including a first current collector and a first electrode, the first current collector comprising a first insulating layer and a pair of first conductive layers, the pair of first conductive layers sandwiching the first insulating layer, the first electrode being disposed on the first current collector, the first current collector including a first end part at which the first electrode is not disposed; (b) an intermediate laminate including an electrode and a separator, the electrode having a polarity different from a polarity of the first electrode; (c) a second laminate disposed to be spaced apart from the first laminate in a lamination direction by interposing the intermediate laminate, the second laminate including a second current collector and a second electrode, the second current collector comprising a second insulating layer and a pair of second conductive layers, the pair of second conductive layers sandwiching the second insulating layer, the second current collector including a second end part at which the second electrode is not disposed, the second electrode being disposed on the second current collector and having the same polarity as the first electrode; (d) a metal sheet disposed to be lined up in the lamination direction with respect to the first end part and the second end part, the metal sheet including a first portion and a second portion, the first portion overlapping with the first end part and the second end part in a case of being viewed from the lamination direction, the second portion not overlapping with the first end part and the second end part in a case of being viewed from the lamination direction; and (e) an electrode tab being electrically connected to the first laminate and the second laminate, the electrode tab having a first bonding mark and a second bonding mark, the first bonding mark being a bonding mark due to bonding of the electrode tab with the first end part, the first portion of the metal sheet, and the second end part, the second bonding mark being a bonding mark due to bonding of the electrode tab with the second portion of the metal sheet.

In one exemplary embodiment, the first bonding mark is a welding mark.

In one exemplary embodiment, the first bonding mark has a shape of one or a plurality of lines.

In one exemplary embodiment, the first bonding mark has a shape of one or a plurality of dots.

In one exemplary embodiment, the first bonding mark includes a region in which the pair of first conductive layers, the metal sheet, and the pair of second conductive layers are integrated in a cross section in the lamination direction.

In one exemplary embodiment, the second bonding mark is a welding mark.

In one exemplary embodiment, the second bonding mark has a shape of one or a plurality of lines.

In one exemplary embodiment, the second bonding mark has a shape of one or a plurality of dots.

In one exemplary embodiment, the first portion of the metal sheet further has a preliminary bonding mark due to bonding to either the first end part or the second end part.

In one exemplary embodiment, the first bonding mark is at a position different from a position of the preliminary bonding mark in a case of being viewed from the lamination direction.

In one exemplary embodiment, the first laminate and the second laminate are alternately disposed in the lamination direction multiple times with the intermediate laminate being sandwiched therebetween.

In one exemplary embodiment, the first laminate is formed of a plate-shaped sheet, and the second laminate is formed of a plate-shaped sheet, the plate-shaped sheet being a separate body from the first laminate.

In one exemplary embodiment, the first laminate and the second laminate are each configured to fold or wind one sheet.

In one exemplary embodiment, the metal sheet is provided at at least one end part of the plurality of first end parts or the plurality of second end parts.

In one exemplary embodiment, the metal sheet is provided on one surface of the at least one end part.

In one exemplary embodiment, the metal sheet is provided on each of both surfaces of the at least one end part.

In one exemplary embodiment, the number of the metal sheets is equal to or less than three times a total number of the first end parts and the second end parts.

In one exemplary embodiment, the metal sheet is formed of the same material as the first conductive layer and the second conductive layer.

In one exemplary embodiment, the first electrode and the second electrode are positive electrodes.

In one exemplary embodiment, the first electrode and the second electrode are negative electrodes.

Hereinafter, each embodiment of the present disclosure will be described in detail with reference to the drawings. It is noted that in each drawing, the same or similar elements will be given the same reference numerals, and repeated descriptions will be omitted. Unless otherwise specified, a positional relationship such as up, down, left, and right will be described based on the positional relationship illustrated in the drawings. The dimensional ratio in the drawings does not indicate an actual ratio, and the actual ratio is not limited to the ratio illustrated in the drawings.

As described above, Patent Literature 2 proposes that a plurality of current collectors are folded and then laminated on each metal layer in order to connect each metal layer separated by a resin layer to an electrode tab for leading out a wiring. However, this method requires a new device mechanism in which lamination is carried out while folding back the end part of the current collector for each metal layer. In addition, it is necessary to fold back the end part of the current collector in linkage with the lamination, and thus the productivity is significantly deteriorated. In addition, in this method, even in a case where the electrode tab, the current collector, and each metal layer can be mechanically bonded, the resistance of the bonding portion is increased, and the output characteristics are deteriorated. Such a problem can be solved in a lithium secondary battery 1 (hereinafter, also referred to as a "secondary battery 1") according to one embodiment.

### <Configuration example of secondary battery>

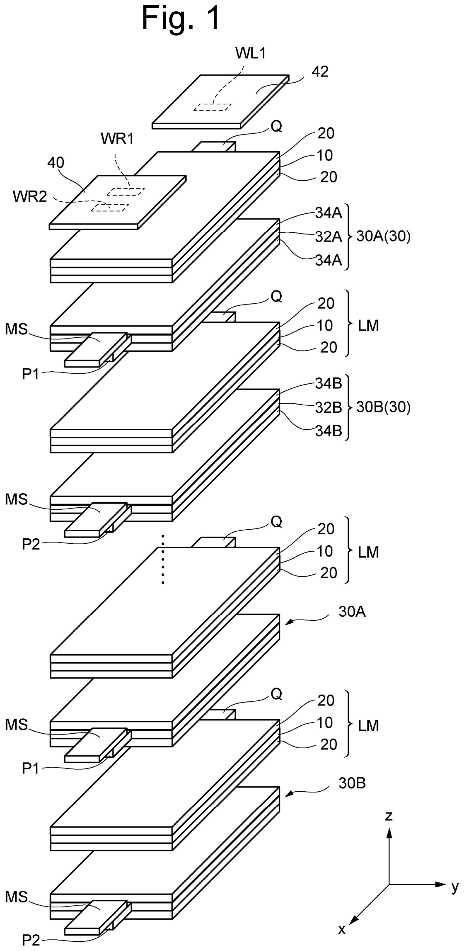

Figure 1 is an exploded perspective view for an explanatory description of a configuration example of a secondary battery 1. As illustrated in Figure 1, the secondary battery 1 is configured to include a negative electrode 10, a separator 20, a first positive electrode laminate 30A, a second positive electrode laminate 30B, a metal sheet MS, a positive electrode tab 40, a negative electrode tab 42, and the like. Hereinafter, each configuration will be described in detail.

### (Negative electrode 10)

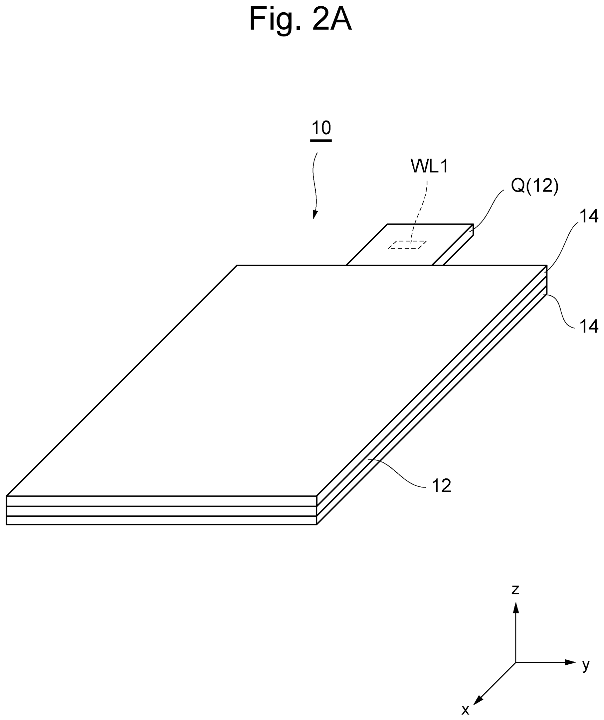

Figure 2A is a perspective view illustrating an example of a negative electrode 10. In one embodiment, the negative electrode 10 is configured to include a negative electrode current collector 12 and a negative-electrode active material 14 disposed on the negative electrode current collector 12.

In one embodiment, as illustrated in Figure 2A, the negative-electrode active materials 14 are respectively disposed on both surfaces of the negative electrode current collector 12. In one embodiment, the negative-electrode active material 14 may be disposed only on one surface of the negative electrode current collector 12.

In one embodiment, the negative electrode current collector 12 is formed from at least one kind selected from the group consisting of Cu, Ni, Ti, Fe, a metal that does not react with Li, as well as an alloy thereof, and stainless steel.

The negative-electrode active material 14 is a substance that causes an electrode reaction, that is, an oxidation reaction and a reduction reaction in the negative electrode. The negative-electrode active material 14 may be, for example, lithium metal, an alloy containing lithium metal, a carbon-based substance, and a metal oxide, as well as a metal that is alloyed with lithium and an alloy containing the metal, and the like. The carbon-based substance may be, for example, graphene, graphite, hard carbon, a carbon nanotube, and the like. The metal oxide may be, for example, a titanium oxide-based compound, a cobalt oxide-based compound, and the like. The above-described metal to be alloyed with lithium may be, for example, silicon, silicon oxide, germanium, tin, lead, aluminum, and gallium, as well as metals obtained by pre-doping these with lithium.

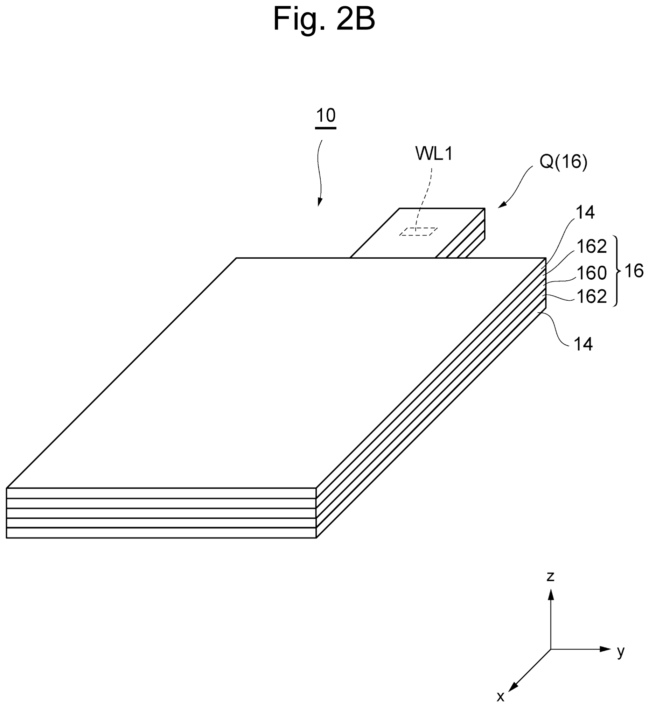

Figure 2B is a perspective view illustrating another example of the negative electrode 10. As illustrated in Figure 2B, the negative electrode 10 may be configured to include a negative electrode current collector 16 and negative-electrode active materials 14 that are respectively disposed on both surfaces of the negative electrode current collector 16. The material of the negative-electrode active material 14 may be the same as that described in Figure 2A. The negative electrode current collector 16 may be composed of a negative electrode insulating layer 160 and a pair of negative electrode conductive layers 162 that are disposed to sandwich the negative electrode insulating layer 160.

In one embodiment, the negative electrode insulating layer 160 may be formed of a sheet-shaped (film-shaped) or fibrous resin. The negative electrode conductive layer 162 is formed from at least one selected from the group consisting of Cu, Ni, Ti, Fe, a metal that does not react with Li, as well as an alloy thereof, and stainless steel. The negative electrode conductive layer 162 is Cu in one example. Since the negative electrode current collector 16 includes the negative electrode insulating layer 160, while ensuring a thickness (rigidity) required for the negative electrode current collector 16, the weight of the negative electrode current collector 16 can be reduced as compared with a case where the negative electrode current collector 16 is composed of only the conductive layer.

As illustrated in Figure 2A and Figure 2B, the negative electrode current collector (12 or 16) has a negative electrode end part Q. In one embodiment, the negative electrode end part Q is constituted to extend outward (in the x direction) from the side surface of the negative electrode current collector as a part of the negative electrode current collector. The negative-electrode active material 14 is not formed on the negative electrode end part Q. A first bonding mark WL1 with the negative electrode tab 42 is formed on the negative electrode end part Q.

### (Negative electrode tab 42)

As illustrated in Figure 1, the negative electrode tab 42 is disposed to be lined up in the lamination direction (z direction) with respect to each of the negative electrode end parts Q. In one embodiment, the negative electrode tab 42 may be disposed above or below each negative electrode end part Q. In one embodiment, the negative electrode tab 42 may be disposed between a certain negative electrode end part Q and a negative electrode end part Q adjacent to the certain negative electrode end part Q.

The negative electrode tab 42 is bonded to each of the negative electrode end parts Q. In addition, the negative electrode tab 42 is electrically connected to each negative electrode 10 by interposing each negative electrode end part Q. A first bonding mark WL1 due to bonding to each negative electrode end part Q is formed on the negative electrode tab 42. The first bonding mark WL1 may be one or a plurality of points (spots) or may be a continuous line or surface. In one embodiment, the negative electrode tab 42 and each negative electrode end part Q may be bonded by welding. In this case, the first bonding mark WL1 is a welding mark. The welding may be, for example, ultrasonic welding, laser welding, resistance welding, or spot welding.

### (Separator 20)

The separator 20 is disposed on the negative electrode 10. In the example illustrated in Figure 1, the separator 20 is disposed on both surfaces of the negative electrode 10. The separator 20 physically and/or electrically isolates the negative electrode 10 and the positive electrode laminate 30 from each other and also ensures the ion conductivity of lithium ions. In one embodiment, the separator 20 may be at least one kind selected from the group consisting of a porous member having insulating properties, a polymer electrolyte, a gel electrolyte, and an inorganic solid electrolyte. As the separator 20, one kind of member may be used alone, or two or more kinds of members may be used in combination.

In a case where the separator 20 includes a porous member having insulating properties, the pores of the porous member are filled with a substance having ion conductivity (an electrolyte solution, a polymer electrolyte, a gel electrolyte, and/or the like). As a result, the separator 20 exhibits ion conductivity. A material constituting the porous member having insulating properties is not particularly limited, and examples thereof include an insulating polymer material, and specific examples thereof include polyethylene (PE) and polypropylene (PP). That is, the separator 20 may be a porous polyethylene (PE) film, a porous polypropylene (PP) film, or a laminated structure thereof.

In one embodiment, one surface or both surfaces of the separator 20 may be coated with a separator coating layer. As a result, the cycle characteristics of the secondary battery 1 can be improved. In one embodiment, the separator coating layer may be a film that is continuous with a uniform thickness in an area of 50% or more of the surface of the separator 20. In one embodiment, the separator coating layer may contain a binder such as polyvinylidene fluoride (PVDF), a mixed material of styrene butadiene rubber and carboxymethyl cellulose (SBR-CMC), or polyacrylic acid (PAA). In one embodiment, the separator coating layer may be constituted by adding inorganic particles such as silica, alumina, titania, zirconia, or magnesium hydroxide to the above-described binder.

In one embodiment, the thickness of the separator 20 (including a coating layer in a case where the separator 20 includes the coating layer) may be 3.0 µm or more and 40 µm or less. As a result, the volume occupied by the separator 20 can be reduced while the negative electrode 10 and the positive electrode laminate 30 are isolated from each other. In one embodiment, the thickness of the separator 20 may be 5.0 µm or more, 7.0 µm or more, or 10 µm or more. In one embodiment, the thickness of the separator 20 may be 30 µm or less, 20 µm or less, or 10 µm or less.

### (Intermediate laminate LM)

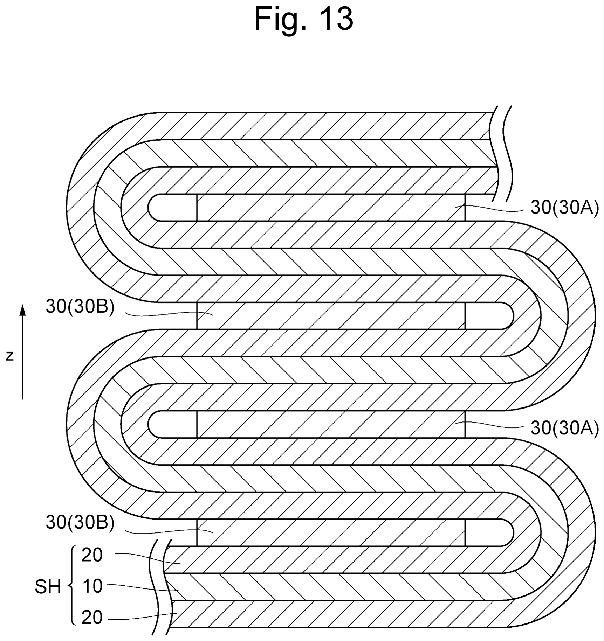

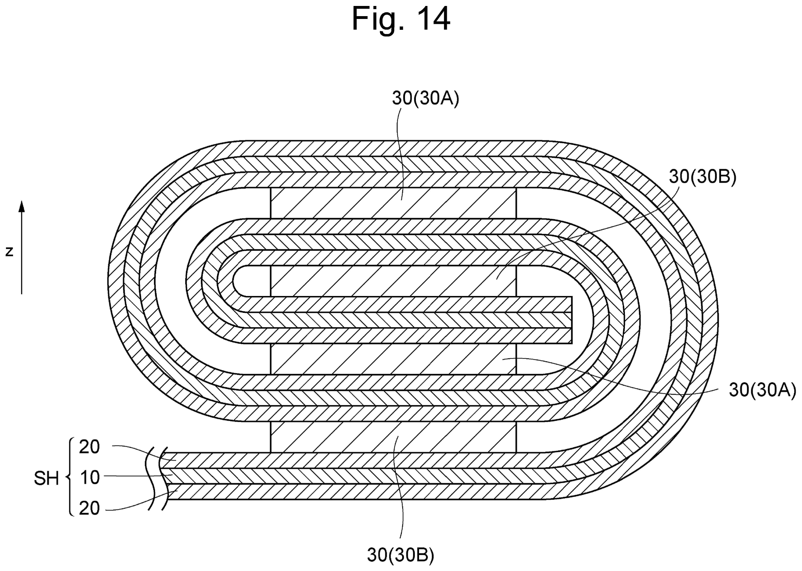

As illustrated in Figure 1, in one embodiment, the negative electrode 10 and the separator 20 constitute an intermediate laminate LM. The intermediate laminate LM may have a structure in which the separator 20, the negative electrode 10, and the separator 20 are laminated in this order in a lamination direction (z direction). The secondary battery 1 includes a plurality of intermediate laminates LM. In one embodiment, as illustrated in Figure 1, each of the plurality of intermediate laminates LM may be constituted as one plate-shaped sheet. In one embodiment, the plurality of intermediate laminates LM may be composed of one sheet (an example of this aspect will be described later with reference to Figure 13 and Figure 14).

### (Positive electrode laminate 30 and metal sheet MS)

As illustrated in Figure 1, the first positive electrode laminate 30A includes a current collector 32A and a positive electrode 34A. The first positive electrode laminate 30A is an example of a first laminate. In one embodiment, the first positive electrode laminate may have a structure in which the positive electrode 34A, the current collector 32A, and the positive electrode 34A are laminated in this order in a lamination direction. The current collector 32A has a first end part P1 exposed from the positive electrode 34A. That is, the positive electrode 34A is not formed on the first end part P1. The first end part P1 extends outward (in the x direction) from the side surface of the current collector 32A, as a part of the current collector 32A.

The second positive electrode laminate 30B includes a current collector 32B and a positive electrode 34B. The second positive electrode laminate 30B is an example of the second laminate. In one embodiment, the second positive electrode laminate 30B may have a structure in which the positive electrode 34B, the current collector 32B, and the positive electrode 34B are laminated in this order in the lamination direction. The current collector 32B has a second end part P2 exposed from the positive electrode 34B. That is, the positive electrode 34B is not formed on the second end part P2. The second end part P2 extends outward (in the x direction) from the side surface of the current collector 32B, as a part of the current collector 32B.

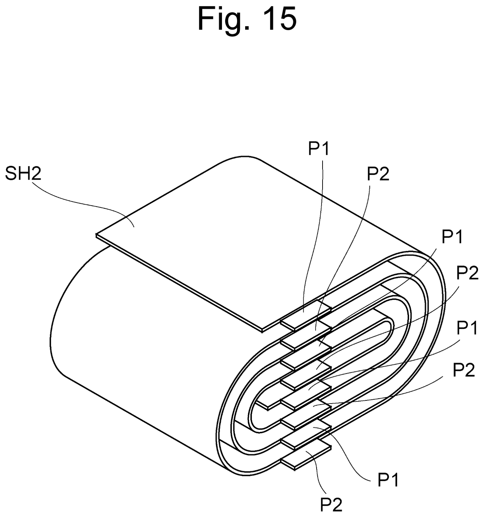

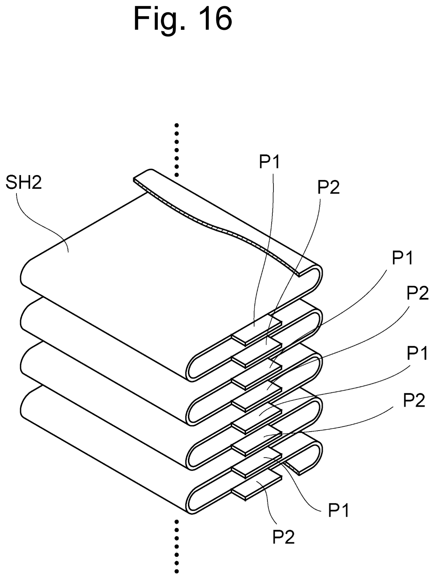

A plurality of the first positive electrode laminate 30A and a plurality of the second positive electrode laminate 30B are alternately laminated in the lamination direction by interposing the intermediate laminate LM (hereinafter, in a case where it is not necessary to distinguish the first positive electrode laminate 30A and the second positive electrode laminate 30B from each other, both are collectively referred to as a "positive electrode laminate 30"). In one embodiment, as illustrated in Figure 1, each of the plurality of positive electrode laminates 30 may be constituted as one plate-shaped sheet. In one embodiment, the plurality of positive electrode laminates 30 may be composed of one sheet (an example of this aspect will be described later with reference to Figure 15 and Figure 16).

In one embodiment, the total number of positive electrode laminates 30 included in the secondary battery 1 may be 5 or more, 10 or more, or 20 or more. In one embodiment, the total number of positive electrode laminates 30 included in the secondary battery 1 may be 50 or less, 40 or less, or 30 or less. In one embodiment, the energy density of the secondary battery 1 may be 300 Wh/kg or more. In one embodiment, the rated capacity of the secondary battery 1 may be 1.5 Ah or more or may be 5 Ah or more.

As illustrated in Figure 1, the metal sheet MS disposed on the first end part P1 and the second end part P2 (hereinafter, both are also referred to as an "end part P" in a case where it is not necessary to distinguish the first end part P1 and the second end part P2 from each other). In one embodiment, the metal sheet MS may be disposed on all the end parts P. In one embodiment, the metal sheet MS may be disposed on a part of the end part P, and the metal sheet MS may not be disposed on the remaining end part P. For example, the metal sheet MS may be disposed at every plurality of end parts P.

In one embodiment, the number and thickness of the metal sheets that are disposed on the end part P may be set based on the site of the end part P in the lamination direction. For example, two or more metal sheets MS may be disposed on an end part P at the center of the secondary battery 1 in the lamination direction, and one metal sheet MS may be disposed on the end parts P at the upper part and the lower part in the lamination direction. In addition, for example, the thickness of the metal sheet MS disposed on the end part P at the center of the secondary battery 1 in the lamination direction may be set to be larger than the thickness of the metal sheet disposed on the end parts P at the upper part and the lower part in the lamination direction. As a result, it is possible to suppress the variation in resistance between the end parts P at the center.

In one embodiment, the number of the metal sheets MS may be three times or less or may be two times or less with respect to the total number of the end parts P. In one embodiment, the number of the metal sheets MS may be the same as the total number of the end parts P, or may be smaller than the total number of the end parts P, for example, may be equal to or less than half of the total number of the end parts P.

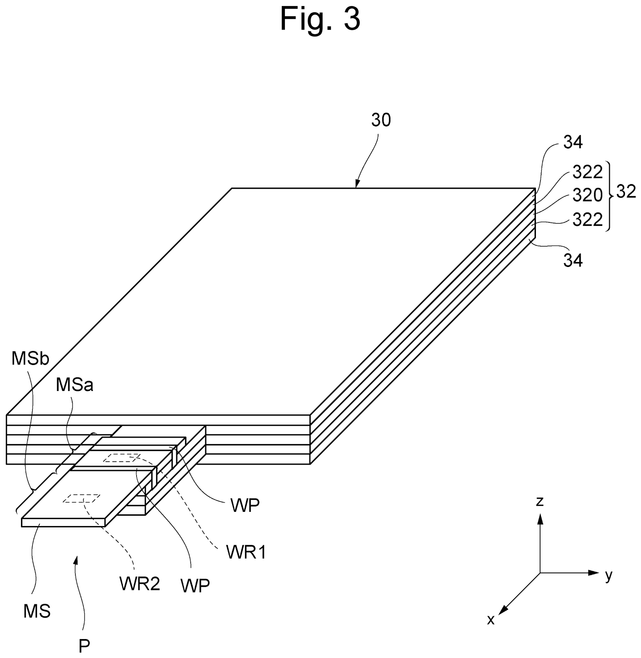

Figure 3 is a perspective view illustrating an example of a positive electrode laminate 30 and a metal sheet MS. In one embodiment, the positive electrode laminate 30 may have a current collector 32 and positive electrodes 34 which are respectively disposed on both surfaces of the current collector 32. The current collector 32 has an insulating layer 320 and a conductive layer 322 that is formed to sandwich the insulating layer 320.

The insulating layer 320 of the current collector 32 may be composed of, for example, a sheet-shaped (film-shaped) or fibrous resin. The resin may be, for example, at least one of a polyolefin resin such as polyethylene terephthalate (PET), polyethylene, or polypropylene, or a thermoplastic resin such as polystyrene, polyvinyl chloride, or polyamide. The insulating layer 320 may be configured to laminate at least one or more of the resins a plurality of times. In one embodiment, the insulating layer 320 is formed from a material having a melting point of 150°C or higher and 300°C or lower. In one embodiment, the thickness of the insulating layer 320 may be 3 µm or more and 10 µm or less or may be 4 µm or more and 8 µm or less.

The insulating layer 320 can function to melt, for example, in a case where abnormal heat generation occurs in an overcharged state or a high temperature state, to damage the positive electrode laminate 30, and to block a short-circuit current inside the battery. As a result, a rapid temperature rise inside the secondary battery 1 can be suppressed, and the ignition of the battery can be suppressed. That is, the insulating layer 320 can contribute to the improvement of the safety of the secondary battery 1.

The conductive layer 322 of the current collector 32 is formed on both surfaces of the insulating layer 320 so that the insulating layer 320 is sandwiched. The conductive layer 322 is in physical and/or electrical contact with the positive electrode 34 and functions to transfer electrons to and from the positive electrode 34. The conductive layer 322 is composed of a conductor that does not react with lithium ions in the battery. In one embodiment, the conductive layer 322 is composed of at least one kind of material selected from the group consisting of aluminum, titanium, stainless steel, nickel, and alloys thereof. In one example, the conductive layer 322 is aluminum or an aluminum alloy. In one embodiment, the conductive layer 322 is formed by subjecting the above-described material to vapor deposition, sputtering, electrolytic plating, or bonding on the surfaces of both sides of the insulating layer 320. In one embodiment, the thickness of each conductive layer 322 may be 0.5 µm or more and 5 µm or less, 0.7 µm or more and 3 µm or less, or 0.8 µm or more and 2.0 µm or less.

The positive electrode 34 is formed on both surfaces of the current collector 32. As the positive electrode 34, a publicly known material may be appropriately selected depending on the use application. The thickness of the positive electrode 34 may be appropriately adjusted according to the desired capacity and rate characteristics of the battery. In one embodiment, the thickness of each of the positive electrodes 34 is, for example, 20 µm or more and 150 µm or less.

In one embodiment, the positive electrode 34 has a positive-electrode active material. The positive-electrode active material is a substance for holding a carrier metal in the positive electrode 34 and thus can also be referred to as a host material of the carrier metal. The positive-electrode active material is a substance for holding lithium ions in the positive electrode 34, and in this case, by charging and discharging of the battery, the positive-electrode active material is filled with lithium ions and lithium ions are desorbed from the positive-electrode active material. As a result, the stability and the output voltage of the battery can be improved.

In one embodiment, the positive-electrode active material is a metal oxide or a metal phosphate. The metal oxide may be, for example, a cobalt oxide-based compound, a manganese oxide-based compound, or a nickel oxide-based compound. The metal phosphate may be, for example, an iron phosphate-based compound or a cobalt phosphate-based compound. In one embodiment, the positive-electrode active material may be at least one selected from the group consisting of LiCoO₂, LiNiₓCo_{y}Mn_{z}O (x + y + z = 1), LiNiₓCo_{y}Al_{z}O (x + y + z = 1), LiNiₓMn_{y}O (x + y = 1), LiNiO₂, LiMn₂O₄, LiFePO₄, LiCoPO₄, LiFeOF, LiNiOF, and LiTiS₂. The positive-electrode active material may be used alone or in a combination of two or more kinds thereof. In one embodiment, the content of the positive-electrode active material in the positive electrode 34 may be 50% by mass or more and 100% by mass or less with respect to the entire positive electrode 34.

In one embodiment, the positive electrode 34 may contain one or more components other than the positive-electrode active material.

In one embodiment, the positive electrode 34 may contain a positive electrode sacrificial material. The positive electrode sacrificial material is a lithium-containing compound which causes an oxidation reaction and substantially does not cause a reduction reaction in a charge/discharge potential range of the positive-electrode active material.

In one embodiment, the positive electrode 34 may contain a gel electrolyte. The gel electrolyte can improve the adhesive force between the positive electrode 34 and the current collector 32. In one example, the gel electrolyte contains a polymer, an organic solvent, and a lithium salt. The polymer in the gel electrolyte may be, for example, a copolymer of polyethylene and/or polyethylene oxide, polyvinylidene fluoride, a copolymer of polyvinylidene fluoride and hexafluoropropylene, or the like.

In one embodiment, the positive electrode 34 may contain a conductive auxiliary agent and/or a binder. In one example, the conductive auxiliary agent is carbon black, a single-walled carbon nanotube (SWCNT), a multi-walled carbon nanotube (MWCNT), a carbon nanofiber (CF), or the like. In one example, the binder is polyvinylidene fluoride, polytetrafluoroethylene, styrene butadiene rubber, an acrylic resin, a polyimide resin, or the like. In one embodiment, the content of the conductive auxiliary agent is 0.5% by mass or more and 30% by mass or less with respect to the entire positive electrode 34. In one embodiment, the content of the binder may be 0.5% by mass or more and 30% by mass or less with respect to the entire positive electrode 34.

In one embodiment, the positive electrode 34 may contain a polymer electrolyte. In one example, the polymer electrolyte is a solid polymer electrolyte that mainly contains a polymer and an electrolyte, and a semi-solid polymer electrolyte that mainly contains a polymer, an electrolyte, and a plasticizer. In one embodiment, the total content of the polymer electrolyte may be 0.5% by mass or more and 30% by mass or less with respect to the entire positive electrode 34.

In one embodiment, as illustrated in Figure 3, the metal sheet MS may be bonded to one surface (one surface of the pair of conductive layers 322) of the end part P of the current collector 32. In one embodiment, the metal sheet MS may be bonded to the other surface (the other surface of the pair of conductive layers 322) of the end part P of the current collector 32. In one embodiment, one or more metal sheets MS may be provided at the end part P. For example, one metal sheet MS may be bonded to each of one surface and the other surface of the end part P of the current collector 32.

As illustrated in Figure 3, the metal sheet MS includes a first portion MSa and a second portion MSb. The first portion MSa is a portion that overlaps with the end part P in a case of being viewed from the lamination direction (z direction). The second portion MSb is a portion that does not overlap with the end part P in a case of being viewed from the lamination direction (z direction). In one embodiment, the second portion MSb is a portion that extends outward (in the x direction) from the first portion MSa.

As illustrated in Figure 3, a preliminary bonding mark WP is formed between the first portion MSa of the metal sheet MS and the end part P by the bonding of the metal sheet MS and the end part P. In one embodiment, the preliminary bonding mark WP may be a bonding mark by welding, that is, a welding mark. The welding may be, for example, ultrasonic welding, laser welding, resistance welding, or spot welding. The welding is, in one example, ultrasonic welding. In one embodiment, a part or the whole of the metal sheet MS and the conductive layer 322 may be fused at the end part P and then integrated with each other by heat or the like in the preliminary bonding mark WP.

As illustrated in Figure 3, a first bonding mark WR1 is formed on the first portion MSa of the metal sheet MS and the end part P. In addition, a second bonding mark WR2 is formed on the second portion MSb of the metal sheet MS. Although details will be described later, the first bonding mark WR1 is a bonding mark between the end part P and the metal sheet MS, and the positive electrode tab 40, and the second bonding mark WR2 is a bonding mark between the metal sheet MS and the positive electrode tab 40. The preliminary bonding mark WP, the first bonding mark WR1, and the second bonding mark WR2 are each formed at positions different from each other in a case of being viewed from the lamination direction (z direction).

In one embodiment, as illustrated in Figure 3, the metal sheet MS may be constituted to cover only a part of the end part P of the current collector 32 instead of covering the entire end part P. For example, the metal sheet MS may be disposed at a position spaced apart from the positive electrode 34 by a predetermined distance. In this case, an insulating layer may be provided in a region of the end part P on the conductive layer 322, where the region is a region in which the metal sheet MS is not disposed. In this case, the short-circuiting between the negative electrode 10 and the positive electrode 34 by interposing the conductive layer 322 and/or the metal sheet MS at the end part P is suppressed, and the safety of the secondary battery 1 can be improved in a case where the separator 20 has undergone damage or the like. The insulating layer may be composed of, for example, a sheet-shaped (film-shaped) or fibrous resin. The resin may be, for example, at least one of a polyolefin resin such as polyethylene terephthalate (PET), polyethylene, or polypropylene, or a thermoplastic resin such as polystyrene, polyvinyl chloride, or polyamide. It is noted that in one embodiment, the metal sheet MS may be configured to cover the entire surface of the end part P of the current collector.

In one embodiment, the metal sheet MS is formed from at least one kind of material selected from the group consisting of aluminum, titanium, stainless steel, nickel, and an alloy thereof. In one example, the metal sheet MS is a hard aluminum foil. In one example, the metal sheet MS is a soft aluminum foil. The soft aluminum foil may be formed by subjecting a hard aluminum foil to a heat treatment at a high temperature (about 400°C). In one embodiment, the metal sheet MS may be formed of the same material as the conductive layer 322.

In one embodiment, the thickness of the metal sheet MS may be set based on the thickness of the insulating layer 320 and the thickness of the conductive layer 322. For example, in a case where the sum of the total thickness (A) of the respective metal sheets MS and the total thickness (B) of the respective conductive layers 322 is denoted as X (= A + B) and the total thickness of the respective insulating layers 320 is denoted as Y, the thickness of the metal sheet MS may be set such that a relationship of 0.85 < X/Y < 2.3 is satisfied. In one embodiment, 1.0 < X/Y < 2.0 may be satisfied. In one embodiment, the thickness of the metal sheet MS may be larger than the thickness of the insulating layer 320. In one embodiment, all the metal sheets MS may have the same thickness, or some of the metal sheets MS may have thicknesses different from each other. In one embodiment, the thickness of the metal sheet MS may be 3 µm or more, 5 µm or more, or 7 µm or more. In one embodiment, the thickness of the metal sheet MS may be 15 µm or less, 12 µm or less, or 10 µm or less.

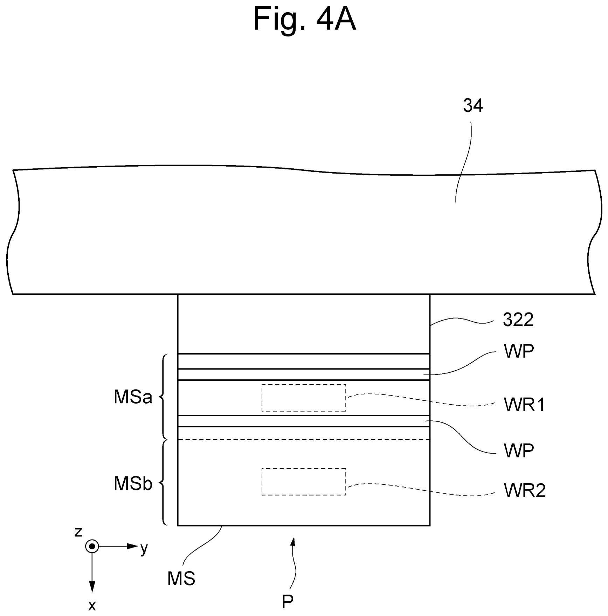

Figure 4A is a view for an explanatory description of an example of a bonding mark. Figure 4A is a plan view of the vicinity of the end part P of the positive electrode laminate 30 illustrated in Figure 3. As illustrated in Figure 3, a plurality of rows (for example, two rows) of the preliminary bonding marks WP may be formed in a line shape along the width direction (y direction) of the end part P. As illustrated in Figure 4A, the preliminary bonding mark WP is formed at a position different from the positions of the first bonding mark WR1 and the second bonding mark WR2 in a case of being viewed from the lamination direction. The preliminary bonding mark WP, the first bonding mark WR1, and the second bonding mark WR2 do not overlap with each other in a case of being viewed in a plan view.

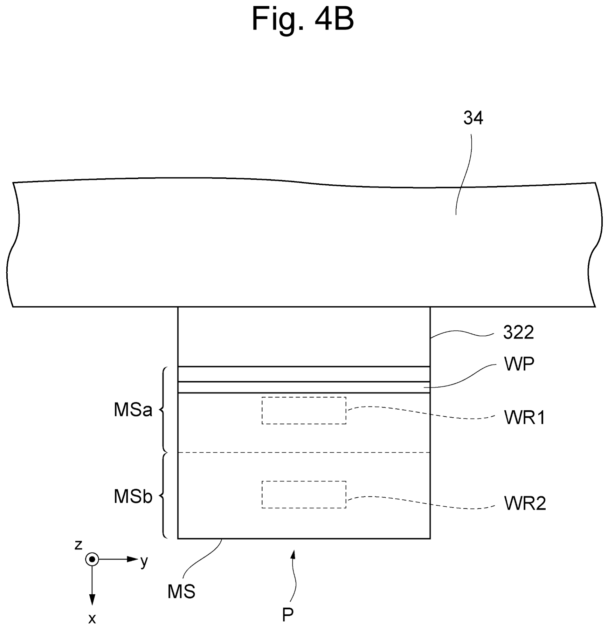

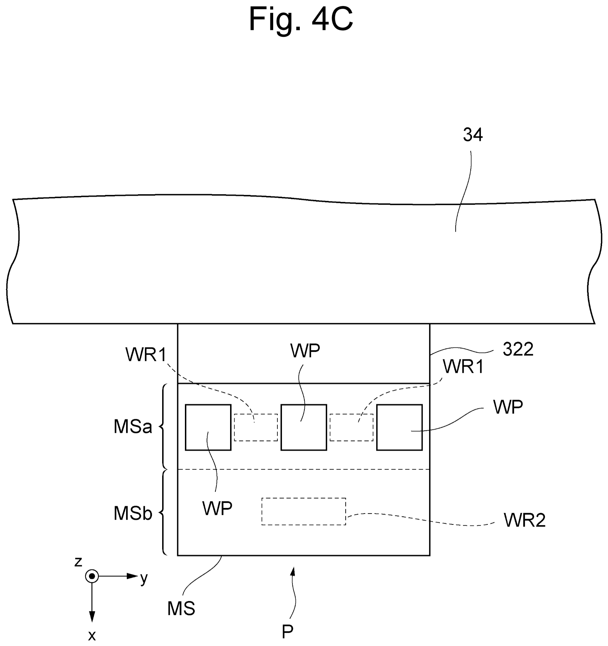

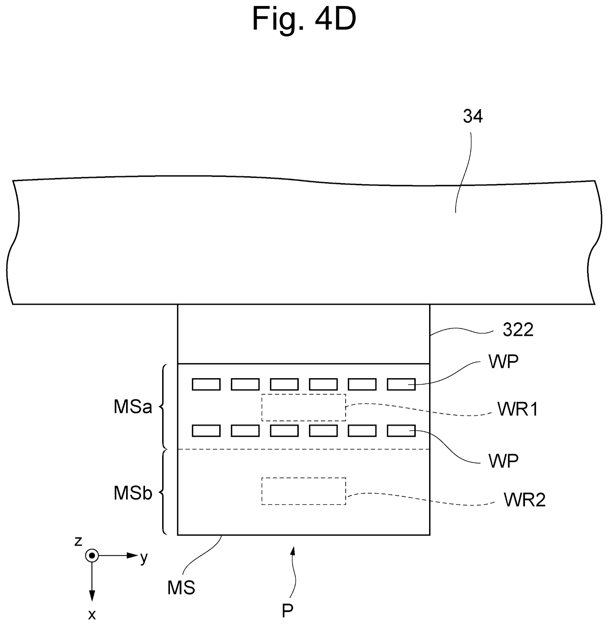

Figure 4B to Figure 4D are each a view for an explanatory description of another example of the bonding mark. In one embodiment, as illustrated in Figure 4B, the preliminary bonding marks WP may be formed in a line shape in one row along the width direction (y direction) of the end part P. In one embodiment, as illustrated in Figure 4C and Figure 4D, the preliminary bonding marks WP has a shape of a plurality of dots or may be formed in one row (Figure 4C) or a plurality of rows (Figure 4D) along the width direction (y direction) of the end part P. In any of Figure 4B to Figure 4D, the preliminary bonding mark WP is disposed at a position different from the positions of the first bonding mark WR1 and the second bonding mark WR2 in a case of being viewed from the lamination direction. That is, in any of Figure 4B to Figure 4D, the preliminary bonding mark WP, the first bonding mark WR1, and the second bonding mark WR2 do not overlap with each other in a case of being viewed in a plan view.

### (Positive electrode tab 40)

As illustrated in Figure 1, the positive electrode tab 40 with respect to the end part P (P1 or P2) of each current collector 32 (32A, 32B) and each metal sheet MS is disposed to be lined up in a lamination direction (z direction). In one embodiment, the positive electrode tab 40 may be disposed above or below the end part P of each current collector 32 and each metal sheet MS. In one embodiment, the positive electrode tab 40 may be disposed between a certain end part P and an end part P adjacent to the certain end part P.

The positive electrode tab 40 is formed of a conductive material. The positive electrode tab 40 may be formed of, for example, aluminum or an aluminum alloy. In one example, the positive electrode tab 40 may be formed of hard aluminum. In one embodiment, the thickness of the positive electrode tab 40 may be 0.05 mm or more and 1 mm or less, or may be 0.1 mm or more and 0.5 mm or less.

The positive electrode tab 40 is bonded to each end part P of each current collector 32 and each metal sheet MS. As a result, the positive electrode tab 40 is electrically connected to each positive electrode 34 by interposing each end part P. The first bonding mark WR1 and the second bonding mark WR2 are formed on the positive electrode tab 40.

The first bonding mark WR1 is a bonding mark formed due to the bonding of the positive electrode tab 40 and the first portion MSa of each end part P and each metal sheet MS. The first bonding mark WR1 may be one or a plurality of points (spots) in a case of being viewed in a plan view, or may be a continuous line or surface. In one embodiment, the first bonding mark WR1 may be a bonding mark by welding, that is, a welding mark. The welding may be, for example, ultrasonic welding, laser welding, resistance welding, or spot welding. The welding is, in one example, ultrasonic welding.

The second bonding mark WR1 is a bonding mark formed due to the bonding of the positive electrode tab 40 and the second portion MSb of each metal sheet MS. The second bonding mark WR2 may be one or a plurality of points (spots) in a case of being viewed in a plan view, or may be a continuous line or surface. In one embodiment, the second bonding mark WR2 may be a bonding mark by welding, that is, a welding mark. The welding may be, for example, ultrasonic welding, laser welding, resistance welding, or spot welding. The welding is, in one example, ultrasonic welding.

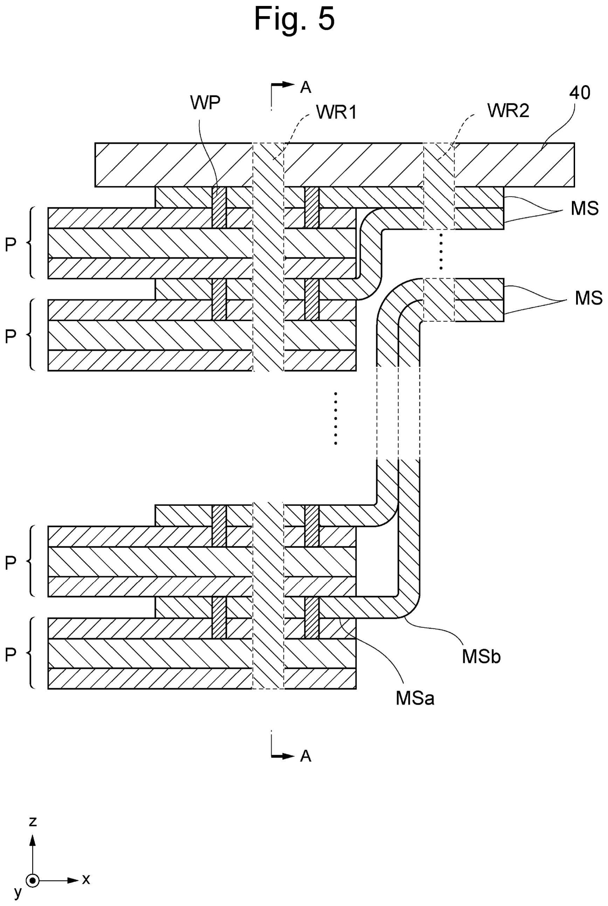

Figure 5 is a view for an explanatory description of a bonding state of a positive electrode tab 40, an end part P, and a metal sheet MS. Figure 5 schematically illustrates a cross section obtained by cutting, along the xz plane, a site of the end part P, in which the preliminary bonding mark WP, the first bonding mark WR1, and the second bonding mark WR2 are included.

As illustrated in Figure 5, the preliminary bonding mark WP, the first bonding mark WR1, and the second bonding mark WR2 are provided at positions different from each other in a case of being viewed from the lamination direction. The preliminary bonding mark WP is formed for each end part P. In other words, one preliminary bonding mark WP is not formed across the plurality of end parts P. On the other hand, the first bonding mark WR1 is formed over the entirety of the positive electrode tab 40, each end part P, and the first portion MSa of each metal sheet MS. That is, the first bonding mark WR1 is formed to penetrate without being intermittently from the positive electrode tab 40 to the end part P of the lowermost layer in the lamination direction. In addition, the second bonding mark WR2 is formed over the entirety of the positive electrode tab 40 and the second portion MSb of each metal sheet MS. That is, the second bonding mark WR2 is formed to penetrate without being intermittently from the positive electrode tab 40 to the second portion MSb of the metal sheet MS as the lowermost layer.

As illustrated in Figure 5, the second portion MSb of each metal sheet MS extends outward (in the x direction) from the first portion MSa of the metal sheet MS bonded to the end part P. The thermal conductivity of the metal sheet MS tends to be higher than the thermal conductivity of the end part P including the insulating layer 320 (for example, a resin or the like). Therefore, the heat of the end part P (the current collector 32) is transferred from the first portion MSa of the metal sheet MS to the second portion MSb on the outer side of the first portion MSa, and it can be released to the outside directly or through the electrode tab 40 from the second portion MSb. As a result, the heat generated inside the secondary battery 1 can be efficiently released to the outside. That is, the heat dissipation properties of the secondary battery 1 can be improved.

In addition, the second portions MSb of the respective metal sheets MS are bonded to each other without interposing the end part P in the second bonding mark WR2 (unlike the first portion MSa in the first bonding mark WR1). That is, the bonding region (second bonding mark WR2) between the electrode tab 40 and the second portion MSb does not include the insulating layer 320 and is composed of only a metal. Therefore, the resistance in the second bonding mark WR2 can be suppressed to be low. As a result, the output characteristics of the secondary battery 1 can be improved.

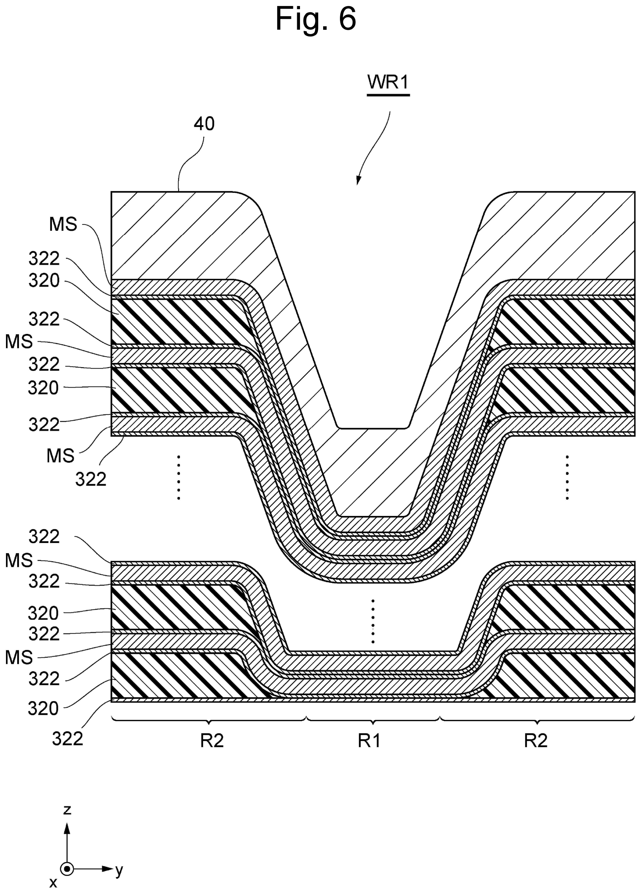

Figure 6 is a view for an explanatory description of the first bonding mark WR1. Figure 6 schematically illustrates a cross section (an A-A cross section in Figure 5) obtained by cutting the first bonding mark WR1 along the yz plane. As illustrated in Figure 6, the cross section of the first bonding mark WR1 includes the first region R1 and the second region R2. In one embodiment, the cross section of the first bonding mark WR1 may have a recessed part that is recessed in one of the lamination directions.

In the first region R1, the conductive layer 322 and the metal sheet MS (first portion MSa) are integrated and laminated, and are bonded to the positive electrode tab 40. Here, being integrally laminated includes a state in which a part or the whole of the respective conductive layers 322 and the metal sheet MS (first portion MSa) are fused by heat or the like (a state in which the respective layers cannot be distinguished from each other).

In one embodiment, the first region R1 may be substantially free of the insulating layer 320 along the lamination direction. The first region R1 provides a physical path for electrically connecting the electrode tab 40 to each conductive layer 322 and the metal sheet MS.

In one embodiment, the first region R1 may be constituted between the two second regions R2. In one embodiment, the maximum thickness of the first region R1 may be equal to or less than half of the maximum thickness of the second region R2.

In the second region R2, a pair of conductive layers 322 sandwiching the insulating layer 320 and the metal sheet MS are laminated. That is, the second region R2 is a region including the insulating layer 320 along the lamination direction.

In one embodiment, the first bonding mark WR1 may be formed by welding. In this case, the first bonding mark WR1 is a welding mark. In the welding, the positive electrode tab 40, the end part P, and the first portion MSa of the metal sheet MS may be pressed along the lamination direction. As a result, the insulating layer 320 is softened at the welded site and is extruded outward from the welded site in the width direction (the left-right direction in Figure 6). In addition, at the welded site, each conductive layer 322 and the metal sheet MS are thermally melted and integrated. As a result, the first region R1 and the second region R2 can be formed.

By the way, as described above, the insulating layer 320 can suppress a rapid temperature rise inside the secondary battery 1 and can suppress the ignition of the battery, for example, in a case where abnormal heat generation occurs in an overcharged state or a high temperature state. In the current collector having a configuration in which the insulating layer is sandwiched between the conductive layers, it is difficult to ensure stable bonding quality (variation control) in the bonding of the end part of the current collector and the electrode tab or in each layer as the number of current collectors increases or as the thickness of the insulating layer increases. For example, in a case where the electrode tab and all the end parts are pressed with a strong force in an attempt to weld the electrode tab and all the end parts, the conductive layer at the end part may be damaged or broken, for example, in a case where the conductive layer is thin. On the other hand, in a case where the electrode tab is welded with a force that does not damage the conductive layer, there is a concern that the bonding may be insufficient and the resistance between the end part of the current collector and the electrode tab may increase.

In this regard, in the secondary battery 1 according to one embodiment, the metal sheet MS is disposed between at least one end part P and one end part P. The metal sheet MS functions as an additional conductive layer of the conductive layer 322 in the first bonding mark WR1, and it increases the proportion of the conductive layer to the insulating layer 320. Therefore, the increase in resistance in the first bonding mark WR1 can be suppressed. As a result, the output characteristics of the secondary battery 1 can be improved. In addition, the metal sheet MS can also function as a protective layer of the conductive layer 322 at the end part P in a case of bonding the positive electrode tab 40 to the end part P. As a result, for example, in a case where the total number (the number of laminations) of the positive electrode laminates 30 of the secondary battery 1 is large, the damage and breakage of the conductive layer 322 can be suppressed even in a case where the positive electrode tab 40 and each end part P are pressed and bonded with a strong force. This makes it possible to improve the production yield of the secondary battery 1. In one embodiment, the resistance of the second bonding mark WR2 may be 5.0 mΩ or less, may be 3.0 mΩ or less, may be 1.0 mΩ or less, or may be 0.5 mΩ or less.

### (Electrolyte solution)

In one embodiment, the secondary battery 1 may contain an electrolyte solution. The electrolyte solution is a liquid containing a solvent and an electrolyte, and it has ion conductivity. The electrolyte solution may be rephrased as a liquid electrolyte and act as a conductive path for lithium ions. Therefore, in a case where the secondary battery 1 has an electrolyte solution, the internal resistance is reduced, and the energy density, the capacity, and the cycle characteristics can be improved.

The electrolyte solution may be, for example, a solution that fills the housing (pouch) of the secondary battery 1. In addition, for example, the electrolyte solution may be infiltrated into the separator 20, and in addition, it may be held by the polymer to constitute a polymer electrolyte or a gel electrolyte.

The electrolyte contained in the electrolyte solution may be, for example, a lithium salt. The lithium salt may be, for example, one selected from the group consisting of Lil, LiCl, LiBr, LiF, LiBF₄, LiPF₆, LiAsF₆, LiSO₃CF₃, LiN(SO₂F)₂, LiN(SO₂CF₃)₂, LiN(SO₂CF₃CF₃)₂, LiB(O₂C₂H₄)₂, LiB(C₂O₄)₂, LiB(O₂C₂H₄)F₂, LiB(OCOCF₃)₄, LiNO₃, and Li₂SO₄, or a combination of two or more thereof.

As a solvent to be contained in the electrolyte solution, for example, a non-aqueous solvent having a fluorine atom (hereinafter, referred to as a "fluorinated solvent") and a non-aqueous solvent having no fluorine atom (hereinafter, referred to as a "non-fluorine solvent") may be added.

The fluorinated solvent may be, for example, 1,1,2,2-tetrafluoroethyl-2,2,3,3-tetrafluoropropyl ether, 1,1,2,2-tetrafluoroethyl-2,2,2-trifluoroethyl ether, 1H,1H,5H-octafluoropentyl-1,1,2,2-tetrafluoroethyl ether, and the like.

The non-fluorine solvent may be, for example, triethylene glycol dimethyl ether, tetraethylene glycol dimethyl ether, 1,2-dimethoxyethane, dimethoxyethane, dimethoxypropane, dimethoxybutane, diethylene glycol dimethyl ether, acetonitrile, dimethyl carbonate, diethyl carbonate, ethyl methyl carbonate, ethylene carbonate, propylene carbonate, chloroethylene carbonate, methyl acetate, ethyl acetate, propyl acetate, methyl propionate, ethyl propionate, trimethyl phosphate, triethyl phosphate, or 12-crown-4.

One or two or more of the fluorinated solvents and/or the non-fluorine solvents may be freely used either alone or in combination at any proportion. The contents of the fluorinated solvent and the non-fluorine solvent are not particularly limited, and the proportion of the fluorinated solvent in the total volume of the solvent may be 0% to 100% by volume, and the proportion of the non-fluorine solvent in the total volume of the solvent may be 0% to 100% by volume.

### <Manufacturing method for secondary battery>

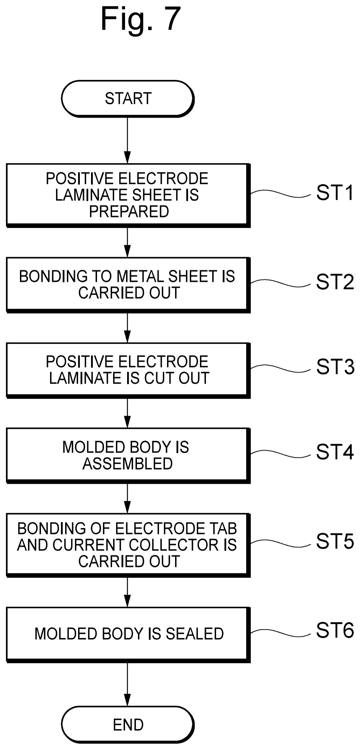

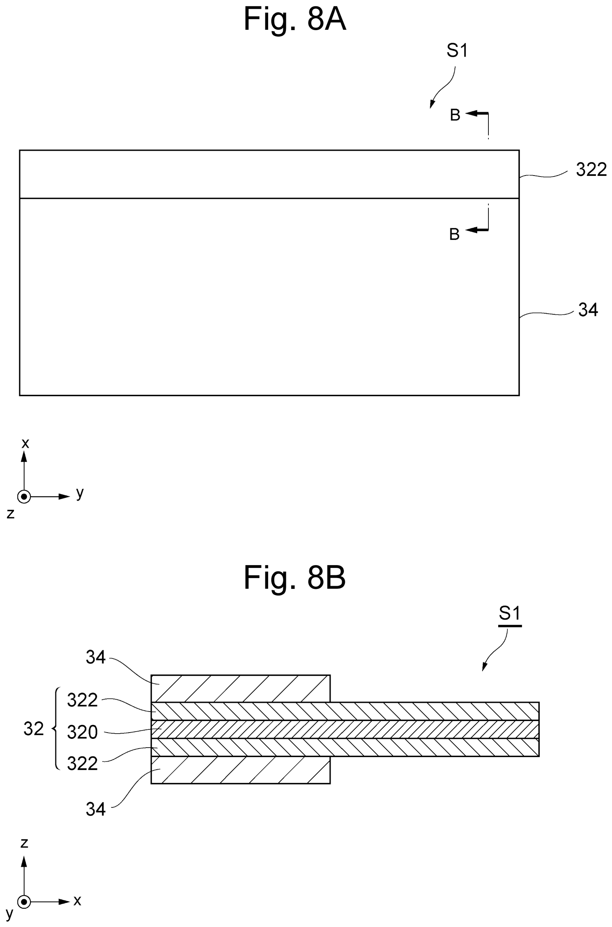

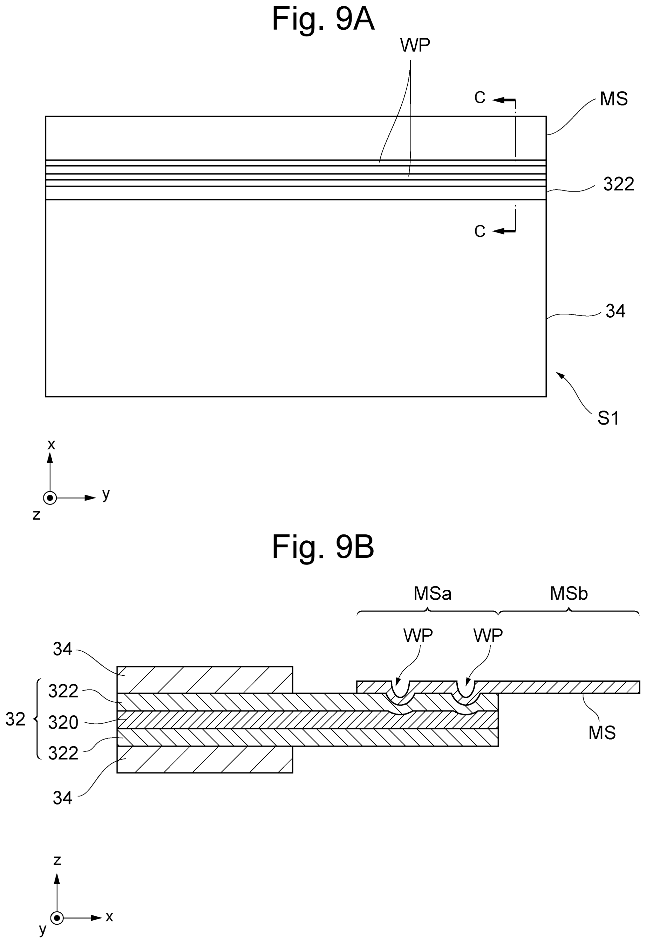

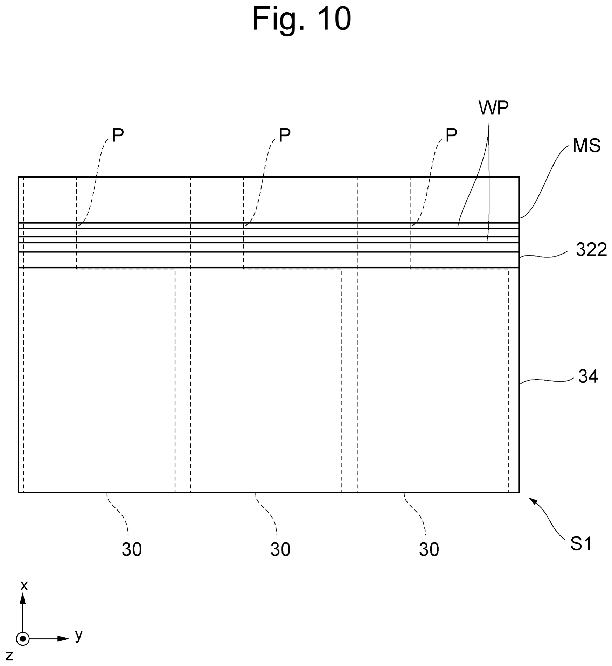

An example of a manufacturing method for the secondary battery 1 (hereinafter, also referred to as "the present manufacturing method") will be described with reference to Figure 7 to Figure 10. Figure 7 is a flowchart illustrating an example of the present manufacturing method. Figure 8A and Figure 8B are each a view for an explanatory description of a step ST1 of Figure 7. Figure 9A to Figure 9D are each a view for an explanatory description of a step ST2 of Figure 7. Figure 10 is a view for an explanatory description of a step ST3 of Figure 7.

As illustrated in Figure 7, the present manufacturing method includes a step ST1 of preparing a positive electrode laminate sheet, a step ST2 of bonding a metal sheet of the positive electrode laminate sheet, a step ST3 of cutting out a positive electrode laminate from the positive electrode laminate sheet, a step ST4 of assembling a molded body, a step ST5 of bonding the electrode tab to the current collector, and a step ST6 of sealing the molded body in an airtight container.

First, in the step ST1, as illustrated in Figure 8A and Figure 8B, a positive electrode laminate sheet S1 is prepared. Figure 8A is a plan view of the positive electrode laminate sheet S1. Figure 8B is a B-B cross-sectional view of Figure 8A. As illustrated in Figure 8A, the positive electrode laminate sheet S1 may be a strip-shaped sheet having a longitudinal direction (y direction) and a lateral direction (x direction). In one embodiment, as illustrated in Figure 8A and Figure 8B, the positive electrode laminate sheet S1 may be composed of a current collector 32 and a positive electrode 34 applied onto both surfaces of the current collector 32. The current collector 32 may have an insulating layer 320 and a conductive layer 322 that is formed to sandwich the insulating layer 320. In one end of the positive electrode laminate sheet in the lateral direction (x direction), the positive electrode 34 is not formed, and the conductive layer 322 of the current collector 32 is exposed.

Next, in the step ST2, as illustrated in Figure 9A to Figure 9D, the metal sheet MS is bonded to one end of the positive electrode laminate sheet S1 in the lateral direction. Figure 9A is a plan view of a positive electrode laminate sheet S1 to which the metal sheet MS has been bonded. Figure 9B to Figure 9D are examples of a C-C cross section of Figure 9A.

In the step ST2, the metal sheet MS is bonded to the positive electrode laminate sheet S1 such that the metal sheet MS has a portion (first portion MSa) overlapping one end of the positive electrode laminate sheet S1 in the lateral direction and a portion (second portion MSb) extending from the one end of the positive electrode laminate sheet S1 to the other end thereof in the lateral direction (see Figure 9B to Figure 9D). Then, the preliminary bonding mark WP is formed in a line shape, for example, along the longitudinal direction by the bonding in the step ST2 (see Figure 9A). In the step ST2, the metal sheet MS may be bonded to the positive electrode laminate sheet S1 by welding. The welding may be, for example, ultrasonic welding, laser welding, resistance welding, or spot welding. The welding is, in one example, ultrasonic welding.

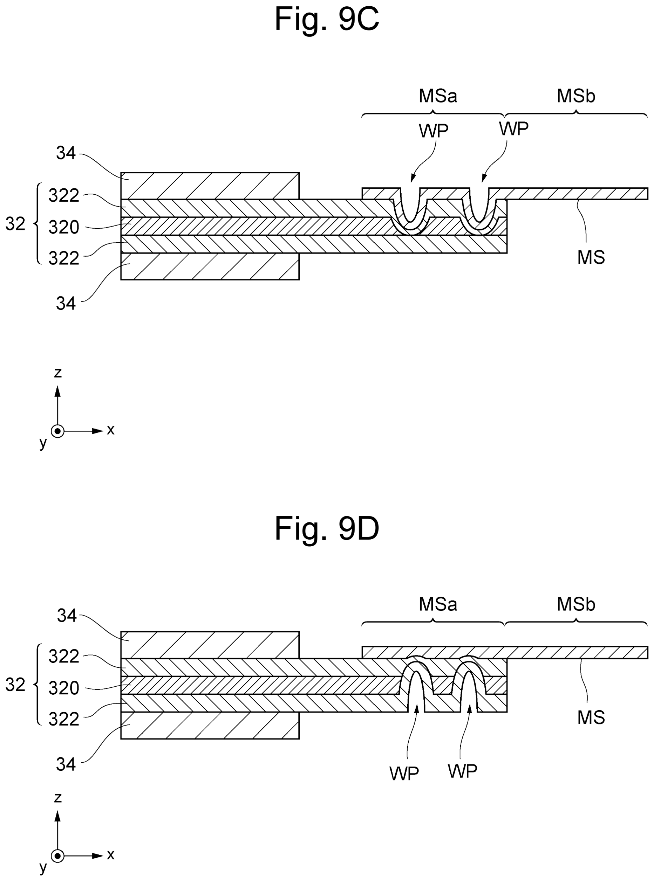

In one embodiment, the bonding in the step ST2 may be carried out by pressing the metal sheet MS against the current collector 32. For example, as illustrated in Figure 9B and Figure 9C, the preliminary bonding mark WP may be formed such that the first portion MSa of the metal sheet MS is recessed toward the current collector 32 side. In one embodiment, as illustrated in Figure 9B, the preliminary bonding mark WP may be provided between the metal sheet MS and one conductive layer 322 (which comes into contact with the metal sheet MS). In this case, in the preliminary bonding mark WP, the metal sheet MS is not electrically connected to the other conductive layer 322. In one embodiment, the preliminary bonding mark WP may be provided between the metal sheet MS and both conductive layers 322 as illustrated in Figure 9C. In this case, in the preliminary bonding mark WP, the metal sheet MS is electrically connected to both conductive layers 322.

In one embodiment, the bonding in the step ST2 may be carried out by pressing the current collector 32 against the metal sheet MS. For example, as illustrated in Figure 9D, the preliminary bonding mark WP may be formed such that the current collector 32 is recessed toward the first portion MSa side of the metal sheet MS. In this case, in the preliminary bonding mark WP, the metal sheet MS is electrically connected to both conductive layers 322.

Next, in the step ST3, the positive electrode laminate 30 is cut out. Specifically, using a cutting blade, a laser, or the like, a plurality of positive electrode laminates 30 having a given shape are cut out from a state in which the metal sheet MS is bonded to the positive electrode laminate sheet S1 as illustrated in Figure 10. As a result, a plurality of positive electrode laminates 30 are obtained.

Next, in the step ST4, a molded body in which the positive electrode laminate 30 and the intermediate laminate LM are alternately laminated is assembled. Specifically, the plurality of positive electrode laminates 30 prepared in the step ST3 are disposed in the lamination direction to be spaced apart from each other by interposing the intermediate laminate LM as illustrated in Figure 1. It is noted that in a case where the negative electrode 10 and the separator 20 are constituted in a sheet shape as described later, each positive electrode laminate 30 may be disposed between the separators 20 formed by folding the sheet in a zigzag shape (zigzag form) (see Figure 13) or between the separators 20 formed by winding the sheet (see Figure 14).

Next, in the step ST5, the electrode tab and the current collector are bonded to each other. Specifically, the end part P of each current collector 32 and the metal sheet MS are bonded to each other such that the above-described second bonding mark WR2 is formed on the electrode tab 40. In addition, the negative electrode end part Q is bonded to the negative electrode tab 42 such that a second bonding mark WL2 is formed. The bonding may be carried out by ultrasonic welding, laser welding, resistance welding, or spot welding.

Next, in the step ST6, the molded body prepared in the step ST5 is sealed in an airtight container. In one embodiment, the electrolyte solution may be sealed in an airtight container. The airtight container may be, for example, a laminated film. In the manner as described above, the secondary battery 1 is manufactured.

In the present manufacturing method, the metal sheet MS is bonded in advance to the positive electrode laminate sheet S1 in the step ST2. Therefore, in the step ST3, the metal sheet MS can be cut out at the same time in accordance with the shape of the end part P of the positive electrode laminate sheet S1. That is, another step of cutting out the metal sheet MS in accordance with the shape of the end part P is not required. In addition, in the step ST5, it is not necessary to align the position of the metal sheet MS and the position of the end part P of the current collector 32, and thus the positive electrode tab 40 and the end part P are easily bonded to each other. Further, in the step ST5, it is possible in principle to provide the first bonding mark WR1 such that the first bonding mark WR1 does not overlap with the preliminary bonding mark WP in the lamination direction. By providing the first bonding mark WR1 such that the first bonding mark WR1 does not overlap with the preliminary bonding mark WP in the lamination direction, the bonding state of the first bonding mark WR1 is improved, and the increase in resistance of the first bonding mark WR1 can be suppressed, as compared with a case where both the first bonding mark WR1 and the preliminary bonding mark WP are provided to overlap with each other.

### <Method of using secondary battery>

The secondary battery 1 is charged and discharged by connecting the positive electrode tab 40 to one end of the external circuit and connecting the negative electrode tab 42 to the other end of the external circuit. The external circuit may be, for example, a resistor, a power source, an apparatus, a device, another battery, a potentiostat, or the like. The respective end parts P of the plurality of positive electrode laminates 30 may be connected to the external circuit at the same potential. In addition, each of the negative electrode end parts Q of the plurality of negative electrodes 10 may be connected to the external circuit at the same potential.

In a case where a voltage is applied between the positive electrode tab 40 and the negative electrode tab 42 such that a current flows from the negative electrode tab 42 to the positive electrode tab 40 through an external circuit, the secondary battery 1 is charged, and lithium metal is deposited on the negative electrode 10. In a case where the positive electrode tab 40 and the negative electrode tab 42 in the secondary battery 1 after charging are connected through a desired external circuit, the secondary battery 1 is discharged, and the lithium metal of the negative electrode 10 is electrolytically dissolved.

In one embodiment, in the secondary battery 1, a solid electrolyte interfacial layer (SEI layer) may be formed on the surface of the negative electrode 10 or the surface of the separator 20 (that is, at the interface between the negative electrode 10 and the separator 20) by the first charging (initial charging) after the assembly of the battery. The SEI layer may contain, for example, an inorganic compound containing lithium, an organic compound containing lithium, or the like. In one embodiment, the thickness of the SEI layer is 1.0 nm or more and 10 µm or less. In a case where the SEI layer is formed in the secondary battery 1, lithium metal is deposited or dissolved at the negative electrode 10 and/or an interface between the separator 20 and the SEI layer due to charging and discharging.

According to the secondary battery 1 described above, the output characteristics and the productivity of the battery are capable of being improved.

### <Modification example>

The secondary battery 1 can be variously modified without departing from the scope and gist of the present disclosure.

### (Negative electrode 10)

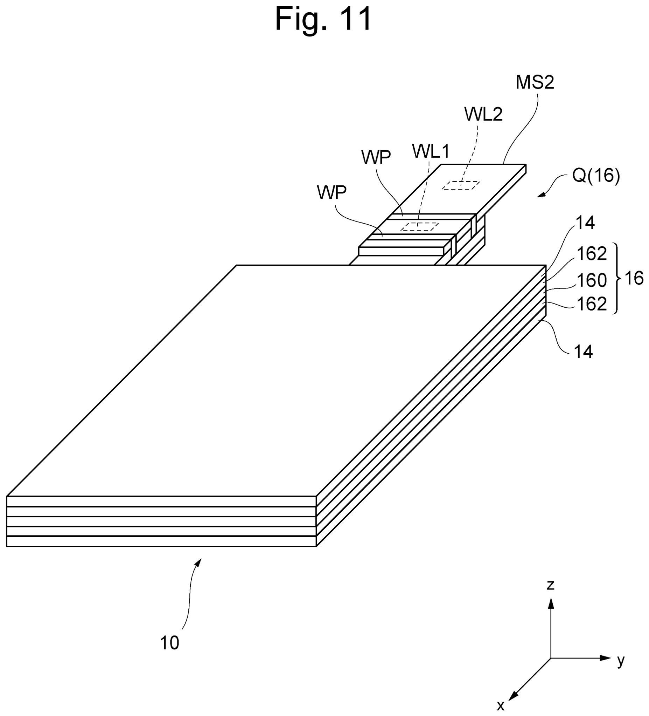

Figure 11 is a perspective view illustrating another example of the negative electrode 10. In one embodiment, a metal sheet may be provided on the negative electrode end part Q of the negative electrode 10. The example illustrated in Figure 11 is an example in which the metal sheet MS2 for a negative electrode is provided on one surface of the negative electrode end part Q of the negative electrode 10 illustrated in Figure 2B. In one embodiment, the metal sheet MS2 for a negative electrode may be the same material as the negative electrode conductive layer 162. The metal sheet MS2 for a negative electrode is, in one example, Cu.

As illustrated in Figure 11, the preliminary bonding mark WP may be formed between the metal sheet MS2 for a negative electrode and the negative electrode end part Q by bonding the metal sheet MS2 for a negative electrode to the negative electrode end part Q. In addition, the first bonding mark WL1 may be formed by bonding the negative electrode end part Q and the metal sheet MS2 for a negative electrode to the negative electrode tab 42. The second bonding mark WL2 may be formed by bonding the metal sheet MS2 for a negative electrode to the negative electrode tab 42. The bonding form and positional relationship between the preliminary bonding mark WP, the first bonding mark WL1, and the second bonding mark WL2 of the negative electrode end part Q may be the same as those of the preliminary bonding mark WP, the first bonding mark WR1, and the second bonding mark WR2 in the end part P described above, and the description thereof will be omitted.

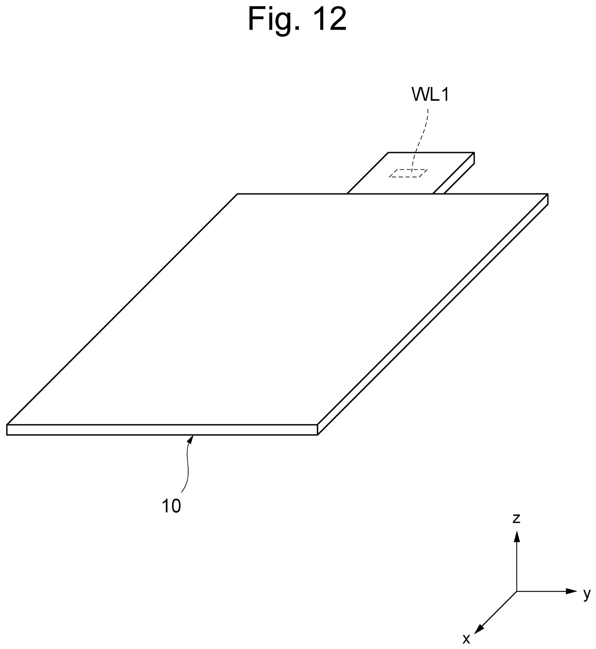

Figure 12 is a perspective view illustrating another example of the negative electrode 10. In one embodiment, the negative electrode 10 may be substantially free of the negative-electrode active material. In the example illustrated in Figure 12, the negative electrode 10 is formed from at least one selected from the group consisting of Cu, Ni, Ti, Fe, a metal that does not react with Li, as well as an alloy thereof, and stainless steel (SUS). The "metal that does not react with Li" may be a metal that does not react with a lithium ion or a lithium metal to form an alloy in the operating state of the secondary battery 1. The negative electrode 10 also functions as a current collector.

It is noted that the fact that the negative electrode 10 " is substantially free of the negative-electrode active material" includes, for example, that the layer thickness of the negative-electrode active material that is deposited on the negative electrode 10 at the end of discharging (for example, a state where the open circuit voltage of the battery is 2.5 V or more and 3.6 V or less) is 25 µm or less. In one embodiment, the layer thickness of the negative-electrode active material at the end of discharging may be 20 µm or less, 15 µm or less, 10 µm or less, or 5 µm or less, and it may be 0 µm. Since the negative electrode 10 is substantially free of a negative-electrode active material, the energy density per volume can be improved in addition to the weight energy density. It is noted that in this case, the secondary battery 1 can also be referred to as an "anode-free lithium battery", a "zero-anode lithium battery", or an "anode-less lithium battery".

In one embodiment, the negative electrode 10 does not have a negative-electrode active material before the initial charging of the battery (in a state from the assembly of the battery until the first charging is carried out). That is, in the secondary battery 1, charging and discharging may be carried out by, after the initial charging, depositing lithium metal on the negative electrode and electrolytically dissolving the deposited lithium metal. In this case, the volume and the mass occupied by the negative-electrode active material are suppressed, the volume and the mass of the entire battery are reduced, and, in principle, the energy density is increased. It is noted that the fact that "lithium metal is deposited on the negative electrode" includes not only that lithium metal is deposited on the surface of the negative electrode but also that lithium metal is deposited on the surface of the solid electrolyte interface (SEI) layer or the surface or inside of the buffer functional layer, which will be described later.

In one embodiment, in a case where the mass of lithium metal deposited on the negative electrode in a state where the voltage is 4.2 V is denoted as M_{4.2} and the same mass at a voltage of 3.0 V is denoted as M_{3.0}, M_{3.0}/M_{4.2} may be 40% or less or 35% or less. In one embodiment, the ratio M_{3.0}/M_{4.2} may be 1.0% or more, 2.0% or more, 3.0% or more, or 4.0% or more.

In one embodiment, the thickness of the negative electrode 10 may be 1.0 µm or more and 30 µm or less. As a result, the volume occupied by the negative electrode 10 in the secondary battery 1 can be reduced, and the energy density can be improved. The thickness of the negative electrode 10 may be 2.0 µm or more and 20 µm or less, 2.0 µm or more and 18 µm or less, or 3.0 µm or more and 15 µm or less.

In one embodiment, on at least a part of a surface facing the positive electrode laminate 30, the negative electrode 10 may be coated with a compound (hereinafter, also referred to as a "negative electrode coating agent") containing an aromatic ring in which two or more elements selected from the group consisting of N, S, and O are each independently bonded. The negative electrode coating agent can be held on the negative electrode 10 by coordinate bonding of the above-described element to the metal atom constituting the negative electrode 10. According to this aspect, the non-uniform deposition reaction of the lithium metal can be suppressed on the surface of the negative electrode 10, and the growth of the lithium metal deposited on the negative electrode 10 in a dendritic shape can be suppressed.

In one embodiment, at least a part of the surface of the negative electrode 10 may be coated with the negative electrode coating agent. In one embodiment, 10% or more of the surface in terms of area ratio may have the negative electrode coating agent, and 20% or more, 40% or more, 60% or more, or 80% or more of the surface may have the negative electrode coating agent.

In one embodiment, the aromatic ring contained in the negative electrode coating agent may be an aromatic hydrocarbon such as benzene, naphthalene, azulene, anthracene, or pyrene, or a heteroaromatic compound such as furan, thiophene, pyrrole, imidazole, pyrazole, pyridine, pyridazine, pyrimidine, or pyrazine. In one example, the aromatic ring is an aromatic hydrocarbon. In one example, the aromatic ring is benzene or naphthalene. In one example, the aromatic ring is benzene.

In one embodiment, the negative electrode coating agent may be constituted by bonding one or more nitrogen atoms to an aromatic ring. In one embodiment, the negative electrode coating agent may be a compound having a structure in which a nitrogen atom is bonded to an aromatic ring and one or more elements other than the nitrogen atom, which are selected from the group consisting of N, S, and O, are each independently bonded the nitrogen atom. In a case where a compound in which a nitrogen atom is bonded to an aromatic ring is used as the negative electrode coating agent, the cycle characteristics of the battery can be improved.

The negative electrode coating agent may be, for example, at least one selected from the group consisting of benzotriazole, benzimidazole, benzimidazolethiol, benzoxazole, benzothiazolethiol, benzothiazole, mercaptobenzothiazole, and derivatives thereof. In one example, the negative electrode coating agent is at least one selected from the group consisting of benzotriazole, benzimidazole, benzoxazole, mercaptobenzothiazole, and derivatives thereof.

### (Buffer functional layer)

In one embodiment, a porous or fibrous buffer functional layer may be provided between the negative electrode 10 and the separator 20. The buffer functional layer has a solid portion (including a gel-like portion) having ion conductivity and electronic conductivity, and a pore portion composed of a gap of the solid portion. In this case, the lithium metal can be deposited on the surface (at the interface between the negative electrode 10 and the buffer functional layer) of the negative electrode 10 and/or inside the buffer functional layer (the surface of the solid portion of the buffer functional layer).

### (Intermediate laminate)

Each of Figure 13 and Figure 14 is a cross-sectional view of a main part for an explanatory description of another configuration example of the lithium secondary battery. In one embodiment, the negative electrode 10 and the separator 20 disposed on both surfaces of the negative electrode 10 may be constituted as one sheet SH.

In one embodiment, as illustrated in Figure 13, the sheet SH may be alternately folded a plurality of times at an acute angle to constitute an intermediate laminate, and the respective positive electrode laminates 30 (30A and 30B) may be disposed between the separators 20 facing each other in the intermediate laminate.

In one embodiment, as illustrated in Figure 14, the sheet SH may be wound a plurality of times to constitute an intermediate laminate, and the respective positive electrode laminates 30 (30A and 30B) may be disposed between the separators 20 facing each other in the intermediate laminate. It is noted that in the example illustrated in Figure 14, each positive electrode laminate 30 may also be configured by winding one sheet as described later (see Figure 15).

In the examples illustrated in Figure 13 and Figure 14, even in a case where the negative electrode 10 or the separator 20 is extremely thin, it can be integrally treated as the sheet SH, and thus the productivity of the battery can be improved. In addition, in the sheet SH, since the negative electrode 10 sandwiched between the separators 20 is subjected to a physical pressure from both surfaces, wrinkling is unlikely to occur in the negative electrode 10 in a case where the sheets SH are laminated, which makes it possible to improve the cycle characteristics of the battery.

### (Positive electrode laminate)

Each of Figure 15 and Figure 16 is a perspective view for an explanatory description of another configuration example of the positive electrode laminate. In one embodiment, as illustrated in Figure 15, each positive electrode laminate 30 may be constituted by winding one sheet SH2 a plurality of times. In one embodiment, as illustrated in Figure 16, each positive electrode laminate 30 may be constituted by alternately folding one sheet SH2 at an acute angle a plurality of times. The sheet SH2 may be configured to include, for example, the current collector 32 and the positive electrode 34 disposed on both surfaces of the current collector 32. In the examples illustrated in Figure 15 and Figure 16, even in a case where the current collector 32 or the positive electrode 34 is extremely thin, it can be integrally treated as the sheet SH2, and thus the productivity of the battery can be improved.

### <Examples>

Next, Examples and Comparative Examples are described below. The present disclosure is not limited by the following examples and comparative examples.

Figure 17 is a view illustrating configurations and results of Examples and Comparative Examples. Figure 18 is a view illustrating a lamination pattern of a metal sheet in Examples and Comparative Examples. "Pattern 1" to "Pattern 4" in Figure 18 correspond to "Pattern 1" to "Pattern 4" shown in "Lamination pattern" in Figure 17.

### (Example 1)

A lithium secondary battery having the structure illustrated in Figure 1 was created as Example 1. First, a negative electrode 10 having a structure illustrated in Figure 2B was prepared. Polyethylene terephthalate (PET) having a thickness of 6 µm was used as the negative electrode insulating layer 160 of the negative electrode current collector 16, and Cu having a thickness of 1.0 µm was subjected to vapor deposition as the negative electrode conductive layer 162. As the negative-electrode active material 14, a mixed material obtained by mixing 97 parts by mass of graphite, 0.5 parts by mass of carbon black as a conductive auxiliary agent, 1.5 parts by mass of carboxymethyl cellulose (CMC) as a binder, and 1.0 parts by mass of styrene-butadiene rubber (SBR) as a binder in water as a solvent was used. In the manner as described above, twenty-one negative electrodes 10 were prepared. In addition, twenty-one metal sheets MS2 (copper foil having a thickness of 4 µm) for a negative electrode were prepared, and they were respectively attached to the negative electrode end parts Q of the respective negative electrodes 10 by ultrasonic welding, thereby obtaining a structure illustrated in Figure 11. Next, as the separator 20, a sheet (thickness: 15 µm) having a surface coated with a mixture of polyvinylidene fluoride (PVDF) and Al₂O₃ was prepared. Then, both surfaces of the negative electrode 10 were sandwiched and pressed with the separator 20 to obtain an intermediate laminate LM.

As the current collector 32 of the positive electrode laminate 30, a current collector obtained by subjecting both surfaces of a film-shaped polyethylene terephthalate (PET, insulating layer 320) having a thickness of 6 µm to vapor deposition with Al (conductive layer 322) to 1.0 µm was used. As the positive electrode 34, a mixture obtained by mixing 96 parts by mass of LiNi_{0.8}Co_{0.15}Al_{0.05}O₂ as a positive-electrode active material, 2 parts by mass of carbon black as a conductive auxiliary agent, and 2 parts by mass of polyvinylidene fluoride (PVDF) as a binder in N-methyl-pyrrolidone (NMP) as a solvent was used. The positive electrode 34 was applied onto both surfaces of the current collector 32 such that the weight per unit area was 23 mg/cm² to obtain a positive electrode laminate 30. Twenty positive electrode laminates 30 were prepared. In addition, twenty metal sheets MS (hard aluminum of 12 µm) were prepared, and they were respectively attached to the end parts P of the current collectors 32 of the respective positive electrode laminates 30 by ultrasonic welding.

Next, the intermediate laminate LM and the positive electrode laminate 30 were alternately laminated. Then, each end part P of the current collector 32 and the metal sheet MS were overlapped with each other and bonded to the positive electrode tab 40 by ultrasonic welding. As the positive electrode tab 40, hard aluminum having a thickness of 0.2 mm was used. In addition, the negative electrode end part Q and the metal sheet MS2 for a negative electrode were overlapped with each other and bonded to the negative electrode tab 42 by ultrasonic welding. As the negative electrode tab 42, copper having a thickness of 0.2 mm, which had been subjected to nickel plating, was used. Such a structural body was inserted into a laminate exterior body and sealed together with an electrolyte solution to obtain a lithium secondary battery. As the electrolyte solution, an electrolyte solution obtained by adding 2 parts by weight of vinylene carbonate (VC) to an electrolyte solution in which lithium hexafluorophosphate (LiPF₆) was dissolved in a solvent obtained by mixing ethylene carbonate (EC), dimethyl carbonate (DMC), and ethyl methyl carbonate (EMC) at a ratio of 30:35:35 in terms of parts by mass to have a concentration of 1 M was used.

### (Comparative Example 1)

In Comparative Example 1, a lithium secondary battery was created in the same manner as in Example 1, except that the metal sheet MS and the metal sheet MS2 for a negative electrode were not used.

In Comparative Example 2, a metal sheet having only the first portion MSa (that is, not having the second portion MSb extending outward from the first portion MSa) was used for the end part P and the negative electrode end part Q. In addition, the metal sheet was provided at every one end part (that is, one for two end parts P and one for two negative electrode end parts Q) (that is, the total number of metal sheets was half of the number of metal sheets in Example 1). A lithium secondary battery was created in the same manner as in Example 1, except for the above-described points.

For each of Example 1, Comparative Example 1, and Comparative Example 2, a resistance (hereinafter, referred to as a "positive electrode resistance") between the positive electrode tab 40 and the positive electrode laminate 30 was measured. Specifically, each of the lithium secondary batteries according to Examples and Comparative Examples was disassembled and subjected to measurement by a four-terminal method. The positive electrode of the clip-type lead of a resistance meter BT3561 manufactured by HIOKI E.E. CORPORATION was connected to the positive electrode tab 40, the negative electrode was sandwiched with clips at a site where the positive-electrode active material of the positive electrode laminate was not applied in one of the twenty positive electrode laminates 30, and the impedance at 1 kHz was measured with a 4-terminal lead. Next, the measurement was carried out by connecting the negative electrode to another positive electrode laminate, and the average value from the twenty negative electrode laminates was determined. In the same manner, a resistance (hereinafter, referred to as a "negative electrode resistance") between the negative electrode tab 42 and the negative electrode 10 was measured.

The positive electrode resistance and the negative electrode resistance of Example 1 were 0.48 mΩ and 0.62 mΩ, respectively. On the other hand, the positive electrode resistance and the negative electrode resistance of Comparative Example 1 were 22.3 mΩ and 19.4 mΩ, respectively. In addition, the positive electrode resistance and the negative electrode resistance of Comparative Example 2 were 0.92 mΩ and 0.88 mΩ, respectively. The positive electrode resistance and the negative electrode resistance of Example 1 were low as compared with those of Comparative Example 2 and were markedly low as compared with those of Comparative Example 1.

It is noted that as a result of subjecting the lithium secondary battery according to each of Example 1, Comparative Example 1, and Comparative Example 2 to a nail piercing test, ignition or explosion did not occur in any case. Here, the nail piercing test is a test for confirming the presence or absence of ignition or explosion of a battery in a case where a nail is penetrated through each battery to cause an internal short circuit in a pseudo manner.

The embodiments of the present disclosure further include the following aspects.

### (Addendum 1)

A lithium secondary battery including:
(a) a first laminate including a first current collector and a first electrode, the first current collector comprising a first insulating layer and a pair of first conductive layers, the pair of first conductive layers sandwiching the first insulating layer, the first electrode being disposed on the first current collector, the first current collector including a first end part at which the first electrode is not disposed;
(b) an intermediate laminate including an electrode and a separator, the electrode having a polarity different from a polarity of the first electrode;
(c) a second laminate disposed to be spaced apart from the first laminate in a lamination direction by interposing the intermediate laminate, the second laminate including a second current collector and a second electrode, the second current collector comprising a second insulating layer and a pair of second conductive layers, the pair of second conductive layers sandwiching the second insulating layer, the second current collector including a second end part at which the second electrode is not disposed, the second electrode being disposed on the second current collector and having the same polarity as the first electrode;
(d) a metal sheet disposed to be lined up in the lamination direction with respect to the first end part and the second end part, the metal sheet including a first portion and a second portion, the first portion overlapping with the first end part and the second end part in a case of being viewed from the lamination direction, the second portion not overlapping with the first end part and the second end part in a case of being viewed from the lamination direction; and
(e) an electrode tab being electrically connected to the first laminate and the second laminate, the electrode tab having a first bonding mark and a second bonding mark, the first bonding mark being a bonding mark due to bonding of the electrode tab with the first end part, the first portion of the metal sheet, and the second end part, the second bonding mark being a bonding mark due to bonding of the electrode tab with the second portion of the metal sheet.

### (Addendum 2)

The lithium secondary battery according to Addendum 1, in which the first bonding mark is a welding mark.

### (Addendum 3)

The lithium secondary battery according to Addendum 1 or Addendum 2, in which the first bonding mark has a shape of one or a plurality of lines.

### (Addendum 4)

The lithium secondary battery according to Addendum 1 or Addendum 2, in which the first bonding mark has a shape of one or a plurality of dots.

### (Addendum 5)

The lithium secondary battery according to any one of Addendum 1 to Addendum 4, in which the first bonding mark includes a region in which the pair of first conductive layers, the metal sheet, and the pair of second conductive layers are integrated in a cross section in the lamination direction.

### (Addendum 6)

The lithium secondary battery according to any one of Addendum 1 to Addendum 5, in which the second bonding mark is a welding mark.

### (Addendum 7)

The lithium secondary battery according to any one of Addendum 1 to Addendum 6, in which the second bonding mark has a shape of one or a plurality of lines.

### (Addendum 8)

The lithium secondary battery according to any one of Addendum 1 to Addendum 6, in which the second bonding mark has a shape of one or a plurality of dots.

### (Addendum 9)

The lithium secondary battery according to any one of Addendum 1 to Addendum 8, in which the first portion of the metal sheet further has a preliminary bonding mark due to bonding to either the first end part or the second end part.

### (Addendum 10)

The lithium secondary battery according to Addendum 9, in which the first bonding mark is at a position different from a position of the preliminary bonding mark in a case of being viewed from the lamination direction.

### (Addendum 11)

The lithium secondary battery according to any one of Addendum 1 to Addendum 10, in which the first laminate and the second laminate are alternately disposed in the lamination direction multiple times with the intermediate laminate being sandwiched therebetween.

### (Addendum 12)

The lithium secondary battery according to Addendum 11, in which the first laminate is formed of a plate-shaped sheet, and the second laminate is formed of a plate-shaped sheet, the plate-shaped sheet being a separate body from the first laminate.

### (Addendum 13)

The lithium secondary battery according to Addendum 11, in which the first laminate and the second laminate are each configured to fold or wind one sheet.

### (Addendum 14)

The lithium secondary battery according to any one of Addendum 11 to Addendum 13, in which the metal sheet is provided at at least one end part of the plurality of first end parts or the plurality of second end parts.

### (Addendum 15)

The lithium secondary battery according to Addendum 14, in which the metal sheet is provided on one surface of the at least one end part.

### (Addendum 16)

The lithium secondary battery according to Addendum 14, in which the metal sheet is provided on each of both surfaces of the at least one end part.

### (Addendum 17)

The lithium secondary battery according to any one of Addendum 11 to Addendum 16, in which the number of the metal sheets is equal to or less than three times a total number of the first end parts and the second end parts.

### (Addendum 18)

The lithium secondary battery according to any one of Addendum 1 to Addendum 17, in which the metal sheet is formed of the same material as the first conductive layer and the second conductive layer.

### (Addendum 19)

The lithium secondary battery according to any one of Addendum 1 to Addendum 18, in which the first electrode and the second electrode are positive electrodes.

### (Addendum 20)

The lithium secondary battery according to any one of Addendum 1 to Addendum 18, in which the first electrode and the second electrode are negative electrodes.

### Reference Signs List

1: lithium secondary battery
10: negative electrode
20: separator
30: positive electrode laminate
32: current collector
320: insulating layer
322: conductive layer
34: positive electrode
40: positive electrode tab
42: negative electrode tab
MS: metal sheet
MSa: first portion
MSb: second portion
LM: intermediate laminate
WR1: first bonding mark
WR2: second bonding mark
WP: preliminary bonding mark

## Claims

1. A lithium secondary battery comprising:
(a) a first laminate including a first current collector and a first electrode, the first current collector comprising a first insulating layer and a pair of first conductive layers, the pair of first conductive layers sandwiching the first insulating layer, the first electrode being disposed on the first current collector, the first current collector including a first end part at which the first electrode is not disposed;
(b) an intermediate laminate including an electrode and a separator, the electrode having a polarity different from a polarity of the first electrode;
(c) a second laminate disposed to be spaced apart from the first laminate in a lamination direction by interposing the intermediate laminate, the second laminate including a second current collector and a second electrode, the second current collector comprising a second insulating layer and a pair of second conductive layers, the pair of second conductive layers sandwiching the second insulating layer, the second current collector including a second end part at which the second electrode is not disposed, the second electrode being disposed on the second current collector and having the same polarity as the first electrode;
(d) a metal sheet disposed to be lined up in the lamination direction with respect to the first end part and the second end part, the metal sheet including a first portion and a second portion, the first portion overlapping with the first end part and the second end part in a case of being viewed from the lamination direction, the second portion not overlapping with the first end part and the second end part in a case of being viewed from the lamination direction; and
(e) an electrode tab being electrically connected to the first laminate and the second laminate, the electrode tab having a first bonding mark and a second bonding mark, the first bonding mark being a bonding mark due to bonding of the electrode tab with the first end part, the first portion of the metal sheet, and the second end part, the second bonding mark being a bonding mark due to bonding of the electrode tab with the second portion of the metal sheet.

2. The lithium secondary battery according to Claim 1, wherein the first bonding mark is a welding mark.

3. The lithium secondary battery according to Claim 2, wherein the first bonding mark has a shape of one or a plurality of lines.

4. The lithium secondary battery according to Claim 2, wherein the first bonding mark has a shape of one or a plurality of dots.

5. The lithium secondary battery according to Claim 1, wherein the first bonding mark includes a region in which the pair of first conductive layers, the metal sheet, and the pair of second conductive layers are integrated in a cross section in the lamination direction.

6. The lithium secondary battery according to Claim 1, wherein the second bonding mark is a welding mark.

7. The lithium secondary battery according to Claim 5, wherein the second bonding mark has a shape of one or a plurality of lines.

8. The lithium secondary battery according to Claim 5, wherein the second bonding mark has a shape of one or a plurality of dots.

9. The lithium secondary battery according to Claim 1, wherein the first portion of the metal sheet further has a preliminary bonding mark due to bonding to either the first end part or the second end part.

10. The lithium secondary battery according to Claim 9, wherein the first bonding mark is at a position different from a position of the preliminary bonding mark in a case of being viewed from the lamination direction.

11. The lithium secondary battery according to any one of Claims 1 to 10, wherein the first laminate and the second laminate are alternately disposed in the lamination direction multiple times with the intermediate laminate being sandwiched therebetween.

12. The lithium secondary battery according to Claim 11,
wherein the first laminate is formed of a plate-shaped sheet, and
the second laminate is formed of a plate-shaped sheet, the plate-shaped sheet being a separate body from the first laminate.

13. The lithium secondary battery according to Claim 11, wherein the first laminate and the second laminate are each configured to fold or wind one sheet.

14. The lithium secondary battery according to Claim 11, wherein the metal sheet is provided at at least one end part of the plurality of first end parts or the plurality of second end parts.

15. The lithium secondary battery according to Claim 14, wherein the metal sheet is provided on one surface of the at least one end part.

16. The lithium secondary battery according to Claim 14, wherein the metal sheet is provided on each of both surfaces of the at least one end part.

17. The lithium secondary battery according to Claim 11, wherein the number of the metal sheets is equal to or less than three times a total number of the first end parts and the second end parts.

18. The lithium secondary battery according to any one of Claims 1 to 10, wherein the metal sheet is formed of the same material as the first conductive layer and the second conductive layer.

19. The lithium secondary battery according to any one of Claims 1 to 10, wherein the first electrode and the second electrode are positive electrodes.

20. The lithium secondary battery according to any one of Claims 1 to 10, wherein the first electrode and the second electrode are negative electrodes.
